# EUROPÄISCHE PATENTSCHRIFT

(11) **EP 1 826 685 B1**
(45) Veröffentlichungstag und Bekanntmachung des Hinweises auf die Patenterteilung: **13.05.2009**
(21) Anmeldenummer: 06002210.0
(22) Anmeldetag: 03.02.2006
(51) Int. Cl.: G06F 17/30, G06Q 30/00, H04L 29/08

(54) **Verfahren zur Auswahl und Darstellung mindestens einer Zusatzinformation**
Method for selecting and presenting of at least one additional information
Procédé pour la sélection et présentation d'au moins une information supplémentaire

(43) Veröffentlichungstag der Anmeldung: 29.08.2007
(73) Patentinhaber: HURRA Communications GmbH, 70599 Stuttgart (DE)
(72) Erfinder: Schweier, René, 70599 Stuttgart (DE)
(74) Vertreter: Schäfer, Wolfgang

(56) Entgegenhaltungen:
- WO-A-01/02984
- DE-A1- 10 138 817
- US-A1- 2001 023 436
- US-A1- 2005 044 178

## Beschreibung

Die Erfindung betrifft ein Verfahren zur Auswahl und Darstellung mindestens einer Zusatzinformation in Abhängigkeit von von einem Server an einen Client über ein Kommunikationsnetzwerk zu übermittelnden oder übermittelten Informationen, bei dem ein dem Client zuggeordnetes Profil oder eine einem Benutzer des Clients zugeordnetes Profil automatisch ausgewertet wird und eine Zusatzinformation aus einer vorgebbaren Menge von Zusatzinformationen ausgewählt wird.

Die Erfindung betrifft auch ein Client-Server-System, umfassend einen einem Benutzer zugeordneten, mit einem Kommunikationsnetzwerk verbindbaren Client und einen mit dem Kommunikationsnetzwerk verbindbaren Server.

Die Erfindung betrifft ferner ein Computerprogramm, das auf mindestens einer Komponente eines Client-Server-Systems ablauffähig ist.

Als Server wird ein Element, beispielsweise eine Komponente eines Kommunikationsnetzwerks, bezeichnet, die bestimmte Dienste zur Verfugung stellt. Derartige Dienste bestehen insbesondere in der Bereitstellung von Informationen, die von einem Server, der beispielsweise ebenfalls eine Komponente eines Kommunikationsnetzwerks ist, angefordert werden können. Ein Server kann beispielsweise ein mit dem sogenannten Internet verbundenes Informationsportal sein, von dem mittels eines als Personal Computer, PDA (Personal Digital Assistent) oder Smartphone ausgebildeten Clients Informationen angefordert werden können. Der Server veranlasst im Falle des Vorliegens einer Informationsanforderung die Übersendung der angeforderten Informationen, beispielsweise in Form einer sogenannten Netzwerkseite oder Web-Page über das Kommunikationsnetzwerk an den Client.

Innerhalb des durch das Internet gebildeten und als World Wide Web (WWW) bezeichneten multimedialen Informationssystems sind Netzwerkseiten mittels einer sogenannten URL (Uniform Resource Locator) adressierbar. Eine URL ist unter anderem aus dem Namen des die Netzwerkseite zur Verfügung stellenden Servers, einem (zumindest virtuellen) Verzeichnis und einem der Netzwerkseite zugeordneten Namen zusammengesetzt. Eine URL ermöglicht es, die dieser URL zugeordnete Netzwerkseite mittels eines Clients durch Anwählen der URL anzufordern. Innerhalb des WWW werden die in einer Netzwerkseite enthaltenen Informationen beispielsweise mittels der standardisierten Seitenbeschreibungssprache HTML (Hypertext Mark-Up Language) oder eines hiervon abgeleiteten Derivats (z.B. WHTML, XHTML) beschrieben.

Es gibt eine Vielzahl weiterer Möglichkeiten, Informationen von einem Server an einen Client zu übermitteln. Bekannte Beispiele sind hier die elektronische Post (e-mail) oder die Übersendung von Informationen in Form einer SMS (Short Message Service). Informationen können ferner in Form eines Datenstroms (Data Stream) von einem Server an einen Client übertragen werden. Ein Datenstrom kann beispielsweise ein über das Kommunikationsnetzwerk übermittelbares Hörfunkprogramm, wie das sogenannte Internet-Radio, oder ein über das Kommunikationsnetzwerk übertragbares Fernsehprogramm sein, der in Form eines die Videoinformation umfassenden Datenstroms von dem Server an den Client übermittelt wird.

Informationen können ferner in Form von Dateien von einem Server an einen Client beispielsweise mittels des sogenannten File Transfer Program (FTP) oder beispielsweise als sogenanntes Attachment zu einer e-mail übermittelt werden.

Es ist bekannt, eine bestimmte Menge von Informationen, beispielsweise die mittels einer angeforderten Netzwerkseite übertragbaren Informationen, mit Zusatzinformation zu versehen. Eine Zusatzinformation kann jede Art von Information sein, die an den Client übermittelt wird, jedoch von dem Client nicht explizit angefordert wurde. Eine besonders bekannte Realisierung von Zusatzinformationen wird in Form sogenannter Werbebanner einem Benutzer des Clients dargestellt. Ein Werbebanner ermöglicht die Darstellung einer Werbenachricht beispielsweise in Form einer textuellen und graphischen Repräsentation.

Der Server kann beispielsweise als sogenannte Suchmaschine realisiert sein. Eine Suchmaschine ist ein mit dem Kommunikationsnetzwerk verbundener Server, an den ein Benutzer eines Clients mittels des Clients eine Anfrage in Form eines Suchbegriffs sendet. Die Suchmaschine ermittelt anhand vorgebbarer Regeln in Abhängigkeit von dem übermittelten Suchbegriff Informationen, die mit dem Suchbegriff assoziiert werden. Die Suchmaschine veranlasst, dass die so ermittelten Informationen, das sogenannte Suchergebnis, mittels einer Netzwerkseite an den Client übermittelt werden. Zur Übermittlung der Informationen wird beispielsweise von dem Server ein HTML-Dokument dynamisch erzeugt, an den Client übermittelt und dem Benutzer mittels eines Softwareelements, beispielsweise eines sogenannten Browsers, angezeigt. Häufig werden derartigen Informationen Zusatzinformationen in Form von Werbebannern hinzugefügt, die dem Benutzer bei Betrachten der übermittelten Netzwerkseite angezeigt werden.

Der Server kann beispielsweise auch die Inhalte einer Zeitung oder Zeitschrift zum Abruf bereithalten. Fordert ein Benutzer mittels eines Clients die einen Artikel repräsentierenden Informationen an, so ist es bekannt, beispielsweise in einer gesonderten Spalte Zusatzinformationen an den Client zu übermitteln. Derartige Zusatzinformationen können beispielsweise Werbenachrichten sein, die Konditionen eines Abonnements beschreiben oder Adressen weiterführender Informationen beschreiben.

Der Server kann ferner auch als sogenannter Online-Shop ausgestaltet sein. Ein Online-Shop ermöglicht es einem Benutzer, mittels eines Clients Informationen über ein Produkt zu erhalten und dieses Produkt über den Online-Shop zu bestellen bzw. zu kaufen. Auch hierbei ist es bekannt, den angeforderten Informationen Zusatzinformationen, beispielsweise in Form von Vorschlägen zum Kauf weiterer Produkte oder in Form technischer Details, zuzuordnen und an den Client zu übermitteln.

Der Server kann ferner auch als ein e-mail-Server ausgebildet sein, der eine e-mail an einen Client übersendet. Auch hier ist es bekannt, einer e-mail Zusatzinformationen hinzuzufügen, die beispielsweise besonders aktuelle Nachrichten betreffen.

Aufgrund der Fülle der beispielsweise über das Internet zur Verfügung gestellten Informationen ist es heutzutage üblich, dass eine bestimmte Information nur nach Zwischenschalten einer oder mehrerer Suchmaschinen aufgefunden werden kann. Hierzu sind üblicherweise mehrere Anfragen an die Suchmaschine und mehrere Übermittlungen von Ergebnislisten an den Client notwendig.

Insgesamt ist die Menge der zwischen Servern und Clients übertragenen Informationen seit der Entstehung derartiger Kommunikationsnetzwerke stark gestiegen und wird weiterhin stark steigen, da zunehmend mehr Informationen über Kommunikationsnetzwerke übermittelt werden. Um den stetig ansteigenden Informationsbedarf von Benutzern bzw. von diesen Benutzern zugeordneten Clients gerecht zu werden, werden unterschiedliche Techniken eingesetzt. Zum einen werden Kommunikationsnetze mit erhöhten Bandbreiten geschaffen und eingesetzt bzw. bestehende Kommunikationsnetzwerke erweitert. Ein Beispiel hierzu aus dem Bereich der mobilen Telekommunikation ist die Entwicklung des sogenannten UMTS (Universal Mobile Telecommunications System), das gegenwärtig das weniger leistungsfähige GSM (Global System for Mobile Telecommunications) ersetzt.

Zum anderen werden Kompressionsalgorithmen entwickelt und eingesetzt, die die über die Kommunikationsnetzwerke zu übertragenden, die Informationen repräsentierenden Datenmengen reduzieren.

Grundsätzlich haben insbesondere auch Zusatzinformationen das Potential, die Menge der über ein Kommunikationsnetzwerk zu übertragenden Daten dadurch zu reduzieren, dass ein Benutzer eines Clients bzw. ein Client diese Informationen nicht selbst anfordern muss.

Hierbei kann die Übermittlung von Zusatzinformationen insbesondere dann zu einer Reduzierung der Gesamtheit der über das Kommunikationsnetzwerk zu übertragenden Informationen führen, wenn die Zusatzinformationen eine hohe Relevanz für den Benutzer haben.

Häufig wird eine Zusatzinformationen jedoch als unangenehm für den Benutzer empfunden, insbesondere dann, wenn die Zusatzinformation für den Benutzer nicht relevant ist.

Aus der US 2001/0023436 A1 sind ein Autorensystem und ein Verfahren zur Zusammenführung von getrennt erstellten Metadaten bekannt, die es ermöglichen, die Metadaten mit einem Videodatenstrom in Verbindung zu bringen und einem als "videoframe" bezeichneten zeitabhängigen Teil des Videodatenstroms zuzuordnen Hierzu werden zunächst in dem Videodatenstrom Zeitstempel ermittelt. Die Zeitstempel werden den zu erzeugenden Metadaten zu Grunde gelegt um mittels in den Metadaten enthaltener Informationen den Videodatenstrom anzureichern

Bei dem bekannten Verfahren werden zunächst einzelne, einen Bildbestandteil beschreibende Informationenmanuell identifiziert. Ferner werden zu dem ursprünglichen Videodatenstrom ein oder mehrere kommentierte Datenströme erzeugt, wobei der kommentierte Datenstrom Daten enthält, die eine Bewegung der zuvor identifizierten Bildbestandteile im Verlauf des Videodatenstroms darstellen Der Videodatenstrom sowie der kommentierte Datenstrom werden mittels der Zeitstempel zueinander in Beziehung gesetzt, um eine Synchronisierung des Videodatenstroms mit den kommentierten Datenströmen zu ermöglichen.

Es ist Aufgabe der vorliegenden Erfindung, eine Möglichkeit zu schaffen, um möglichst relevante Zusatzinformationen auszuwählen und derartig darzustellen, dass diese von einem Benutzer des Clients als möglichst wenig störend empfunden werden.

Die Aufgabe wird durch ein Verfahren nach Anspruch 1 gelöst.

Ein dem Client bzw. dem Benutzer zugeordnetes Profil umfasst beispielsweise persönliche Daten des Benutzers, wie dessen Alter oder besondere Interessenbereiche. Durch Auswertung dieses Profils kann innerhalb der angeforderten oder zu übertragenden Informationen, also beispielsweise innerhalb der zu übertragenden Netzwerkseite, eine bestimmte Teilinformation, beispielsweise ein bestimmtes Wort, ein ein bestimmtes Thema beschreibender Abschnitt oder eine ein Produkt beschreibende Bildinformation, ausgewählt werden.

Insbesondere kann die Teilinformation auch ein Suchbegriff sein, nach dem der Benutzer mittels des Clients zu einem vorherigen Zeitpunkt bei einer Suchmaschine gesucht hat. Hierbei kann dieser auch als Keyword bezeichnete Suchbegriff beispielsweise als Profilinformation in dem dem Client oder dem Benutzer des Clients zugeordneten Profil abgespeichert sein.

Gemäß des erfindungsgemäßen Verfahrens wird ferner eine Zusatzinformation aus einer vorgebbaren Menge von Zusatzinformationen ausgewählt. Die Menge von Zusatzinformationen kann beispielsweise auf dem Server in einer Datenbank abgelegt sein. Es ist ebenso vorstellbar, dass die Menge von Zusatzinformationen von einem oder mehreren weiteren Servern abrufbar ist. Zur Auswahl der Zusatzinformation wird mindestens eine Eigenschaft der ausgewählten Teilinformation ausgewertet. Eine Eigenschaft kann beispielsweise ein Themenbereich sein, der durch die Teilinformation definiert wird. Es kann dann insbesondere vorgesehen sein, dass eine Zusatzinformation ausgewählt wird, die demselben Themenbereich angehört.

Automatisch wird der Teilinformation ein aktivierbares Aktivierungselement zugeordnet. Eine Aktivierung des Aktivierungselements bewirkt dann die Durchführung einer Aktion, die der Zusatzinformation zugeordnet ist. Eine derartige Aktion kann beispielsweise die Anforderung weiterer Informationen sein.

Der Zusatzinformation kann insbesondere selbst ein Link zugeordnet sein, so dass die Zusatzinformation beispielsweise in Form einer Netzwerkseite oder eines ausführbaren Skripts von dem Server oder einem anderen Server abrufbar ist. Hierbei kann das Aktivierungselement mittels eines Links dargestellt werden, so dass die durch das Aktivierungselement definierte Aktion insbesondere die Anforderung dieser Zusatzinformation oder die Ausführung des Skripts sein kann.

Automatisch wird dem Aktivierungselement ein Darstellungselement zugeordnet. Mittels des Darstellungselements wird mindestens ein Parameter bezüglich der Darstellung des Aktivierungselements auf dem Client vorgegeben. Ist das Aktivierungselement beispielsweise ein Link zu der Zusatzinformation, so kann mittels des Darstellungselements definiert werden, dass der Link durch eine Hervorhebung der Teilinformation, beispielsweise durch Unterstreichen oder Umrahmen der Teilinformation, dargestellt wird.

Das Aktivierungselement und das Darstellungselement beschreiben folglich insbesondere Funktionalitäten, die einerseits eine Darstellung des Aktivierungselements, beispielsweise eines Links, und andererseits eine Aktion beschreiben, die zu einer Darstellung der Zusatzinformation führt. Insbesondere kann das Darstellungselement implizit eine Darstellung der Teilinformation beschreiben, der die Zusatzinformation und damit insbesondere auch das Aktivierungselement zugeordnet ist.

Das erfindungsgemäße Verfahren hat damit den Vorteil, dass nur Zusatzinformationen angezeigt werden, die aufgrund der Assoziierung mit einer Teilinformation, die wiederum aufgrund des Profils ausgewählt wird, eine besonders hohe Relevanz für den Benutzer haben kann. Ferner ist es mit dem erfindungsgemäßen Verfahren möglich, die Zusatzinformation selbst nicht sogleich anzuzeigen, sondern die Zusatzinformation nur dann anzuzeigen, wenn das Aktivierungselement aktiviert ist. Der Benutzer kann hierbei durch Aktivierung des Aktivierungselements selbst entscheiden, ob er die Zusatzinformationen ansehen bzw. anfordern möchte.

Vorzugsweise werden die Informationen in Form einer elektronischen Postsendung, einer elektronischen Kurzmitteilung, einer Netzwerkseite oder eines Datenstroms über das Kommunikationsnetzwerk, insbesondere über das Internet, übertragen.

Eine elektronische Postsendung ist beispielsweise eine sogenannte e-mail, die von einem Verfasser geschrieben oder automatisch von einem Softwareelement erzeugt wird. Mittels des erfindungsgemäßen Verfahrens können beispielsweise einzelne Worte innerhalb der e-mail in Abhängigkeit von dem dem Empfänger zugeordneten Profil ausgewählt werden. Das Aktivierungselement kann beispielsweise als Link ausgebildet sein, der bei einer Aktivierung automatisch eine der ausgewählten Zusatzinformationen zugeordnete Netzwerkseite anwählt. Mittels des Darstellungselements kann beispielsweise festgelegt werden, dass das als Teilinformation ausgewählte Wort in Kursivschrift, fettgedruckt oder unterstrichen dargestellt wird,

Eine elektronische Kurzmittelung ist beispielsweise eine sogenannte SMS (Short Message Service), mit der die Übersendung einer Textnachricht auf ein Telekommunikationsgerät, insbesondere ein Mobilfunkgerät möglich ist.

Ein Datenstrom kann Text-, Audio- und/oder Videoinformationen enthalten. Ein Datenstrom kann beispielsweise eine TV-Sendung sein, die Teil des sogenannten Internet-TV ist. Eine Teilinformation kann hierbei beispielsweise eine bestimmte Sequenz innerhalb eines Datenstroms bezeichnen. Eine Teilinformation kann ebenso auch beispielsweise ein bestimmtes Produkt, das in der TV-Sendung gezeigt wird, beschreiben. Soll dem Benutzer angezeigt werden, dass zu diesem Produkt Zusatzinformationen zur Verfügung stehen, so kann als Aktivierungselement beispielsweise eine aktivierbare Schaltfläche (Button) in einem vorgebbaren Bereich eingeblendet werden.

Gemäß einer vorteilhaften Ausführungsform des erfindungsgemäßen Verfahrens wird die Zusatzinformation an den Client erst dann übermittelt, wenn das Aktivierungselement aktiviert wird. Dies hat den Vorteil, dass die Zusatzinformation nur dann über das Kommunikationsnetzwerk an den Client übermittelt wird, wenn dieser tatsächlich sein Interesse an der Zusatzinformation durch Aktivieren des Aktivierungselements zeigt. Dadurch kann der Datenverkehr über das Kommunikationsnetzwerk nochmals reduziert werden.

Gemäß einer bevorzugten Ausführungsform werden die Auswahl der Teilinformation mittels eines dem Server zugeordneten Auswahlmittels durchgeführt und Informationen zusammen mit dem Aktivierungselement an den Client übermittelt. Das Auswahlmittel kann hierbei das spezielle Softwareelement bezeichnen, das die Funktionalität der Auswahl der Teilinformation realisiert. Das Auswahlmittel kann ebenso in Hardware realisiert sein, beispielsweise mittels eines speziellen Servers, der separat von dem die Informationen zur Verfügung stellenden Server angeordnet ist. Hierbei kann selbstverständlich auf dem separaten Server wiederum ein Softwareelement ablaufen, dass die Auswahl der Teilinformation realisiert.

Ebenso kann die Funktionalität der Auswahl der Zusatzinformation bzw. der Auswahl und/oder Auswertung des Profils durch einen Zusatzinformationsserver bzw. Profilserver durchgeführt werden. Der Teilinformation wird dann ein Aktivierungselement zugeordnet und die so aufbereiteten Informationen an den Client übermittelt. Dies hat den Vorteil, dass auf dem Client keine zusätzliche Software installiert werden muss. Vielmehr kann der größte Teil des erfindungsgemäßen Verfahrens auf einem oder mehreren Servern ausgeführt werden und für die Darstellung der Informationen sowie des Aktivierungselements auf bei dem Client vorhandene Realisierungsmöglichkeiten zurückgegriffen werden. Beispielsweise kann das Aktivierungselement als Hyperlink ausgebildet sein, der mittels der von einem auf dem Client ablaufenden Browser zur Verfügung gestellter Mittel dargestellt und aktiviert werden kann.

Gemäß einer anderen bevorzugten Ausführungsform werden die Informationen an den Client übermittelt, die Auswahl der Teilinformation auf dem Client durchgeführt, eine Eigenschaft der ausgewählten Teilinformation an einen Zusatzinformationsserver übermittelt, von dem Zusatzinformationsserver eine Zusatzinformation ausgewählt, die Zusatzinformation oder zumindest das Vorliegen einer Zusatzinformation an den Client übermittelt und auf dem Client das Aktivierungselement angezeigt. Bei dieser Ausführungsform wird folglich die Auswahl einer Teilinformation auf dem Client durchgeführt. Das hierfür notwendige Profil kann beispielsweise direkt auf dem Client vorliegen oder von einem Profilserver über das Kommunikationsnetzwerk angefordert werden. Die ausgewählte Teilinformation selbst oder ein Merkmal, beispielsweise ein Themenbereich, wird dann von dem Client an einen Zusatzinformationsserver übermittelt. Dieser sucht eine hierzu passende Zusatzinformation aus und übermittelt die Zusatzinformation und/oder einen Hinweis auf das Vorliegen der Zusatzinformation, beispielsweise eine der Zusatzinformation zugeordnete URL, an den Client. Dort wird die Teilinformation mit dem Aktivierungselement versehen und dem Benutzer dargestellt. Die Funktionalität der Auswahl der Teilinformation könnte hierbei beispielsweise als sogenanntes Plug-in des Browsers realisiert werden.

Gemäß einer weiteren Ausführungsform wird das Aktivierungselement oder das Darstellungselement auf den Server der Teilinformation zugeordnet. Dies hat den Vorteil, dass bei der Auswahl des Aktivierungselements eine Eigenschaft der ausgewählten Zusatzinformation berücksichtigt werden kann. Umfasst die Zusatzinformation beispielsweise ein sehr geringes Datenvolumen, so kann die Zusatzinformation zusammen mit den Informationen an den Client übermittelt werden. Eine Aktivierung des Aktivierungselements führt dann zu einer Darstellung der bereits übermittelten Zusatzinformation. Umfasst die Zusatzinformation hingegen ein sehr großes Datenvolumen, beispielsweise weil die Zusatzinformation in Form eines Video-Clips, eines Audio-Clips, einer Bild-Datei oder einer Netzwerkseite realisiert ist, so kann das Aktivierungselement derart ausgestaltet sein, dass erst durch die Aktivierung eine Übermittlung der Zusatzinformation an den Client erfolgt.

Wird das Aktivierungselement oder das Darstellungselement hingegen auf dem Client der Teilinformation zugeordnet, so hat dies den Vorteil, dass eine benutzerspezifische Anpassung des Aktivierungselements bzw. des Darstellungselements möglich ist. Ist der Benutzer beispielsweise an einer Vielzahl von Zusatzinformationen interessiert, so kann vorgesehen sein, dass er stets eine automatische Übermittlung der Zusatzinformation wünscht. Dies kann durch eine entsprechende Konfiguration des Aktivierungselements erfolgen. Durch eine benutzerspezifische Anpassung des Darstellungselements kann der Benutzer beispielsweise entscheiden, ob er das Aktivierungselement in Form einer Schaltfläche oder durch Hervorheben der Teilinformation dargestellt bekommen möchte.

Vorzugsweise wird die Teilinformation ausgewählt in Abhängigkeit von einem oder mehreren der folgenden Kriterien:
- mindestens eine Eigenschaft mindestens einer möglichen Zusatzinformation,
- eine Position innerhalb der Informationen und
- eine Eigenschaft der Informationen oder eine Eigenschaft einer Untermenge der Informationen, innerhalb derer sich die Teilinformation befindet.

Eine Eigenschaft einer möglichen Zusatzinformation ist grundsätzlich die Verfügbarkeit der Zusatzinformation an sich. Hiermit kann sichergestellt werden, dass nicht durch die Darstellung eines Aktivierungselements auf eine Zusatzinformation hingewiesen wird, die tatsächlich nicht verfügbar ist. Handelt es sich bei der Zusatzinformation beispielsweise um eine Produktbeschreibung, so kann die Eigenschaft eine Verfügbarkeit der Produktbeschreibung als insbesondere auch eine Verfügbarkeit des Produkts beschreiben. Die Eigenschaft kann ferner einen bestimmten Themenbereich beschreiben oder eine besonders aktuelle Information kennzeichnen. Damit kann die Relevanz der Zusatzinformation nochmals erhöht werden.

Die Berücksichtigung einer Position der Teilinformation innerhalb der zu übermittelnden oder übermittelten Informationen kann beispielsweise verhindern, dass zu einer Teilinformation, die in einer Fußnote dargestellt wird, eine Zusatzinformation angeboten oder übermittelt wird, weil hierbei davon ausgegangen werden kann, dass der Benutzer hiervon nur mit geringer Wahrscheinlichkeit Kenntnis nimmt. Befindet sich die Teilinformation beispielsweise innerhalb eines Textes sehr weit oben, so kann vorgesehen sein, dass diese Teilinformation bevorzugt ausgewählt wird.

Eine Eigenschaft der Informationen oder einer Untermenge der Informationen, innerhalb derer sich die Teilinformation befindet, kann beispielsweise einen Themenbereich oder einen abschnittsweisen Themenbereich beschreiben. Bezeichnen die Informationen beispielsweise aktuelle Tagesnachrichten, so kann vorgesehen sein, dass dort nur sehr wenige oder gar keine Teilinformationen ausgewählt werden. Handelt es sich hierbei jedoch beispielsweise um eine Ergebnisliste einer Produktsuchmaschine, so kann vorgesehen sein, dass eine Vielzahl von Teilinformationen ausgewählt werden. Repräsentieren die Informationen beispielsweise eine Seite einer Online-Zeitschrift, so kann vorgesehen sein, dass eine Teilinformation nur ausgewählt wird, wenn sie innerhalb eines Textabschnitts liegt, dessen Thema einem Interesse des Benutzers möglichst gut entspricht, wobei das Interesse hierbei aus einer Auswertung des Profils abgeleitet werden kann.

Dies ermöglicht es einerseits, Zusatzinformationen zu bestimmten Themenbereichen zuzuordnen und andererseits Teilinformationen nur in Themenbereichen auszuwählen, in denen einerseits eine erhöhte Wahrscheinlichkeit einer Kenntnisnahme durch den Benutzer besteht und dieser andererseits sich nicht durch das Vorhandensein von Zusatzinformationen gestört fühlt. Dies steigert einerseits die Effizienz des erfindungsgemäßen Verfahrens, da nicht unnötig Teilinformation ausgewählt werden, und erhöht andererseits die Relevanz der dargestellten Zusatzinformation.

Besonders vorteilhaft ist es, wenn die Zusatzinformation in Abhängigkeit von einem oder mehreren der folgenden Kriterien ausgewählt wird:
- eine Auswertung des Profils,
- eine Bewertung der zur Auswahl stehenden Zusatzinformation,
- eine den Informationen zugeordnete Eigenschaft, wobei die Eigenschaft einen Inhalt, einen Themenbereich, eine Herkunft oder eine Aktualität beschreibt und
- eine äußere Bedingung, insbesondere ein aktuelles Datum, eine aktuelle Tageszeit, einen aktuellen Aufenthaltsort des Benutzers, einen aktuellen Standort des Clients, eine Temperatur, einen aktuellen Trend oder ein aktuelles Geschehen.

Durch eine erneute Auswertung des Profils für die Auswahl der Zusatzinformation kann besonders gut eine hohe Relevanz der Zusatzinformation sichergestellt werden. Beispielsweise können hiermit nochmals für den Benutzer besonders interessante Themenbereiche oder grundsätzliche Interessen erkannt werden. Ferner kann durch eine geeignete Profilinformation beispielsweise festgestellt werden, ob der Benutzer ein erhöhtes Interesse an technischen Zusatzinformationen beispielsweise zu einem Produkt hat oder ein Angebot eines bestimmten Online-Shops bevorzugt. Ferner kann beispielsweise in Abhängigkeit von Kaufgewohnheiten oder des Berufs auf bestimmte Interessen geschlossen und die Zusatzinformation entsprechend ausgesucht werden.

Die zur Auswahl stehenden Zusatzinformationen können beispielsweise bezüglich der Art der Information - Nachrichten oder Produktinformationen - der Branche, der Anzahl von Aktivierungen (Clicks) oder einer Aktualität bewertet werden.

Handelt es sich bei der Zusatzinformation um eine Zusatzinformation bezüglich eines Produkts, so kann die Bewertung insbesondere auch eine Branche, eine Anzahl von Sales, Leads oder Conversions sowie eine Verfügbarkeit oder Lieferzeit beschreiben. Damit kann die Nützlichkeit der Zusatzinformationen für den Benutzer nochmals gesteigert werden.

Eine den Informationen zugeordnete Eigenschaft beschreibt insbesondere einen thematischen Inhalt oder einen Themenbereich, dem beispielsweise die die angeforderten Informationen repräsentierende Netzwerkseite zugeordnet ist. Ferner kann in Abhängigkeit von der Herkunft der Informationen, beispielsweise dem Online-Shop oder dem Verlag, dem eine Online-Zeitschrift zugeordnet ist, und damit insbesondere in Abhängigkeit von dem Server, von dem die Informationen angefordert wurden, auf ein besonderes Interesse des Benutzers geschlossen und somit eine nochmals höhere Relevanz der Zusatzinformation erreicht werden.

Insbesondere durch die Aufnahme von äußeren Bedingungen bei der Auswahl von Zusatzinformationen kann die Aktualität und damit die Relevanz erhöht werden. Beschreibt die Teilinformation beispielsweise den Begriff "Fitness" und werden die diese Teilinformation umfassenden Informationen morgens angefordert, so kann vorgesehen sein, dass Informationen zur Zusammenstellung eines Fitnessfrühstücks ausgewählt werden. Wird diese Teilinformation hingegen abends angefordert, so kann vorgesehen sein, dass die Zusatzinformation ein besonderes Angebot eines Fitnessclubs beschreibt. Insbesondere, wenn hierbei das dem Benutzer bzw. dem Client zugeordnete Profil ausgewertet wird, kann vorgesehen sein, dass nur Informationen eines Fitnessclubs angeboten werden, der in einer zumutbaren Entfernung zu dem Standort des Benutzers gelegen ist.

Die Zusatzinformation wird in Abhängigkeit von mindestens einer Eigenschaft der ausgewählten Teilinformation ausgewählt. Eine derartige Eigenschaft kann beispielsweise eine Informationsart - Bild-, Video- oder Textinformation - beschreiben. Die Eigenschaft kann ferner eine Position innerhalb der Informationen angeben. Eine Eigenschaft der Teilinformation kann auch beschreiben, ob die Teilinformation ein ausführbares Softwareelement ist, also beispielsweise selbst ein Hyperlink zu einer weiterführenden Information oder zu einem Skript. Handelt es sich bei der Teilinformation um eine Textinformation, beispielsweise um ein Wort, so kann die Eigenschaft auch beschreiben, ob es sich hierbei um ein Verb, Substantiv oder Adjektiv handelt.

Besonders vorteilhaft ist es hierbei, wenn die Teilinformation klassifiziert wird. Beispielsweise bezüglich ihrer Eigenschaft, eines übergeordneten Themas und insbesondere, wenn es sich bei der Teilinformation um eine Textinformation handelt, bezüglich der dieser Teilinformation innewohnenden Semantik. Die ausgewählte Teilinformation wird durch die Klassifizierung mindestens einer ersten Klasse zugeordnet. Ferner wird mindestens eine auswählbare Zusatzinformation mindestens einer zweiten Klasse zugeordnet. Dies bedeutet, dass die auswählbaren Zusatzinformationen bezüglich vorgebbarer Kriterien ebenfalls klassifiziert werden. Es wird dann eine Ähnlichkeit zwischen der ersten Klasse und den zweiten Klassen, die den Zusatzinformationen zugeordnet sind, ermittelt. Wenn die ermittelte Ähnlichkeit einen vorgebbaren absoluten oder relativen Wert erreicht, kann vorgesehen sein, dass die dieser Klasse zugeordnete Zusatzinformation ausgewählt wird. Befinden sich mehrere Zusatzinformationen in derselben Klasse, kann vorgesehen sein, dass eine Bewertung der Zusatzinformationen bezüglich weiterer Kriterien, insbesondere bezüglich vorhandener Profilinformationen, erfolgt.

Mittels dieses Verfahrens kann beispielsweise sichergestellt werden, dass nur Zusatzinformationen ausgewählt werden, die derselben Klasse zugeordnet sind wie die Teilinformationen. Beschreibt die Teilinformation beispielsweise den Begriff "Mode" und sind auswählbare Zusatzinformationen bezüglich eines Anzugs und eines Kostüms vorhanden, so könnten beide Zusatzinformationen aufgrund einer hohen Ähnlichkeit zu dem Begriff "Mode" ausgewählt werden. Ergibt sich aus dem dem Benutzer zugeordneten Profil, dass dieser männlichen Geschlechts ist, so wird die Zusatzinformation bezüglich des Produkts "Anzug" ausgewählt werden. Dies zeigt, dass insbesondere durch eine Berücksichtigung mehrerer Kriterien sowohl bei der Auswahl der Teilinformation als auch bei der Auswahl der Zusatzinformation eine besonders hohe Relevanz erreichbar ist und gleichzeitig sichergestellt werden kann, dass möglichst keine unrelevanten Zusatzinformationen über das Kommunikationsnetzwerk übertragen werden.

Vorzugsweise wird das Aktivierungsmittel mittels einer Bewegung eines dem Client zugeordneten Zeigegeräts, beispielsweise einer sogenannten Computermaus, eines Touchpads, einer Tastatur oder eines Touchscreens, in oder über einen der Teilinformation zugeordneten Bereich aktiviert. Ein der Teilinformation zugeordneter Bereich kann beispielsweise mittels eines eingefärbten und/oder umrahmten Textes oder einer oder mehrerer Zeilen bzw. einer oder mehrerer Spalten kenntlich gemacht werden. Wird das Zeigegerät bzw. ein dem Zeigegerät zugeordnetes graphisches Zeigeelement über diesem Bereich bewegt, so kann automatisch die Aktion - beispielsweise Anzeigen der Zusatzinformation oder Anfordern der Zusatzinformation - ausgeführt werden.

Insbesondere kann das Aktivierungsmittel auch durch eine Betätigung eines Schalters aktiviert werden. Hierbei kann der Schalter beispielsweise ein mechanischer Schalter sein, der an dem Zeigegerät angeordnet ist. Ebenso ist es möglich, dass der Schalter als graphisches Element auf einem Anzeigegerät des Clients dargestellt ist. Der Schalter kann hierbei ein sogenannter "Button" sein, der innerhalb der Informationen oder in einem speziellen Bereich eines Softwareelements, beispielsweise des Browsers, dargestellt wird.

Insbesondere eine Kombination dieser Aktivierungsarten kann vorteilhaft sein. Beispielsweise kann durch eine Bewegung des Zeigegeräts über den der Teilinformation zugeordneten Bereich ein Hinweis auf die Art oder das Thema der Zusatzinformation angezeigt werden. Durch eine Betätigung des Schalters kann dann die eigentliche Zusatzinformation dargestellt bzw. angefordert werden.

Die Zusatzinformation kann beispielsweise selbst lediglich ein Link zu einer weiteren Information sein, so dass die Zusatzinformation beispielsweise eine der weiteren Information zugeordnete URL ist. Das Aktivierungselement wäre hierbei beispielsweise ein der Teilinformation zugeordneter Bereich. Wird dieser beispielsweise mittels eines dem Client zugeordneten Zeigegeräts bzw. Zeigelements überfahren, so könnte die Aktion derart definiert sein, dass die Zusatzinformation, also die URL, in Form eines ebenfalls wieder aktivierbaren Links, eingeblendet wird.

Vorteilhafterweise wird eine dem Benutzer oder dem Client zugeordnete Kennung erfasst und in Abhängigkeit von der Kennung das dem Benutzer oder dem Client zugeordnete Profil automatisch ermittelt. Hierbei kann die Kennung beispielsweise an einen separaten Profilserver über das Kommunikationsnetzwerk übermittelt werden. Der Profilserver sucht das der Kennung entsprechende Profil heraus und übermittelt dieses bzw. eine bestimmte Profilinformation daraus an den Server. Selbstverständlich kann der Profilserver hierbei lediglich als Softwareelement realisiert sein, das dem Server zugeordnet ist.

Vorzugsweise wird die Kennung aus einer Registrierungskennung, einer Kreditkartennummer, einer EC-Kartennummer, einer in einem Cookie abgespeicherten Zeichenfolge, einer Einwahl-Kennung, einer Gerätenummer oder einer Softwarenummer gebildet. Derartige Mittel ermöglichen es, den Client und/oder den Benutzer automatisch zu identifizieren und damit das dem Benutzer bzw. dem Client zugeordnete Profil anzuwählen.

Stellt der Server beispielsweise kostenpflichtige Informationen zur Verfügung, so muss sich der Benutzer bzw. der Client beispielsweise durch Übermittlung einer Kennung und eines Passwords identifizieren. Handelt es sich bei dem Server beispielsweise um einen Online-Shop, bei dem der Benutzer eine Bestellung tätigt, so kann mittels der Kreditkartennummer oder der EC-Kartennummer eine Identifizierung des Benutzers erfolgen.

Besonders vorteilhaft ist es, wenn die Kennung in einem Cookie abgespeichert ist. Ein Cookie bezeichnet eine Zeichenfolge, die in einem dem Client zugeordneten Speicherbereich abgespeichert ist. Ein Cookie kann beispielsweise von dem Server zu einem früheren Zeitpunkt, beispielsweise während einer Registrierung, an den Client übermittelt worden sein. Man spricht hierbei von dem "Setzen eines Cookies". Es kann vorgesehen sein, dass automatisch ein Cookie gesetzt wird, wenn der Client einen auf einer Netzwerkseite dargestellten Link aktiviert oder von dem Server eine Netzwerkseite anfordert. Fordert der Client erneut eine Netzwerkseite oder eine andere Art von Information von dem Server an, so kann ferner vorgesehen sein, dass das Cookie zusammen mit der Anforderung von dem Client an den Server übermittelt wird. Dies ermöglicht es dem Server, bei jeder Anfrage die Identität des Clients bzw. des Benutzers festzustellen.

Eine Gerätenummer kann beispielsweise die Seriennummer des Clients oder einer dem Client zugeordneten Netzwerkkarte sein. Eine Softwarekennung kann beispielsweise eine Seriennummer des Browsers oder eine Registrierungsnummer eines auf dem Client installierten Softwareprodukts sein.

Derartige Kennungen können besonders gut automatisch von dem Server ausgewertet werden, so dass das dem Client bzw. dem Benutzer zugeordnete Profil identifizierbar ist.

Vorzugsweise enthält das Profil mindestens eine Profilinformation bezüglich
- einer Eigenschaft von angeforderten oder übermittelten Informationen,
- eines bestellten oder gekauften Produkts,
- eines nicht gekauften Produkts,
- des Kaufverhaltens des Benutzers,
- eines Interessengebiets,
- eines dem Benutzer zugeordneten personenbezogenen Datums,
- eines Suchbegriffs, der von dem Benutzer, dem Client oder einem anderen dem Benutzer zugeordneten Client an eine Suchmaschine oder eine Produktsuchmaschine übermittelt wurde oder
- einer Reaktion des Benutzers oder eines dem Benutzer zugeordneten Clients bezüglich einer Zusatzinformation.

Insbesondere vorteilhaft ist es selbstverständlich, wenn das Profil eine Vielzahl derartiger Informationen umfasst.

Eine Eigenschaft von angeforderten oder übermittelten Informationen, beispielsweise einer Netzwerkseite oder eines Datenstroms, kann beispielsweise den Typ der realisierten Informationen oder den Inhalt beschreiben. In Abhängigkeit hiervon können Teilinformationen und/oder Zusatzinformationen ausgewählt werden, die ähnlichen Themenbereichen zugeordnet sind oder ähnlichen Informationsarten zugeordnet werden können. Sind die Informationen beispielsweise mittels eines Datenstroms übermittelt worden und realisiert dieser Datenstrom einen einem bestimmten Genre angehörenden Spielfilm, so kann zunächst eine Teilinformation ausgewählt werden. Es kann dann eine Zusatzinformation ausgewählt werden, die zukünftig erscheinende Kinofilme desselben Genres oder mit demselben Schauspieler beschreibt. Ergibt sich aus dem Profil, dass der Benutzer eine Vielzahl von Büchern kauft, so kann ferner vorgesehen sein, dass eine Buchbesprechung eines Buches mit Hintergrundinformation bezüglich dieses Spielfilms oder des Genres dem Benutzer angeboten wird.

Ist die Zusatzinformation beispielsweise eine Produktinformation, so kann eine Profilinformation, die ein bereits bestelltes oder gekauftes Produkt beschreibt, dazu herangezogen werden, derartige Produkte dem Benutzer nicht nochmals zum Kauf anzubieten. Ebenso kann eine Profilinformation bezüglich eines nicht gekauften Produkts herangezogen werden, um ein vergleichbares Produkt anzubieten.

Profilinformationen bezüglich des Kaufverhaltens des Benutzers in einem Ladengeschäft oder bei einem Online-Shop können beispielsweise darüber Aufschluss geben, ob der Benutzer besonders hochpreisige Produkte bevorzugt, häufig Produkte einer bestimmten Produktklasse, beispielsweise Bücher oder Modeartikel, kauft, zu welchen Tages-/Jahreszeiten der Benutzer bevorzugt einkauft oder wie die Zahlungsmoral des Benutzers ist.

Eine Profilinformation, die mindestens einen Suchbegriff beschreibt, kann besonders deutlich ein Interesse des Benutzers darstellen. Damit können einerseits Teilinformationen ausgewählt werden, die mit hoher Wahrscheinlichkeit von dem Benutzer zur Kenntnis genommen werden und andererseits besonders relevante Zusatzinformationen ausgewählt werden.

Eine Profilinformation bezüglich eines dem Benutzer zugeordneten Datums, beispielsweise des Alters, Geschlechts, Wohnorts, Berufs, Hobbys oder weiterer Interessen, kann besonders gut für die Auswahl von relevanter Teilinformationen und Zusatzinformation herangezogen werden.

Eine Profilinformation bezüglich des Verhaltens des Benutzers bezüglich einer diesem dargestellten Zusatzinformation kann beispielsweise angeben, ob bzw. wie häufig der Benutzer eine ihm zu einer Teilinformation angebotene Zusatzinformation durch Aktivieren des Aktivierungselements tatsächlich zur Kenntnis nimmt. Daraus kann wiederum abgeleitet werden, ob die Zusatzinformation für den Benutzer relevant war oder nicht.

Vorteilhafterweise wird das Profil von einem Profilserver verwaltet und umfasst mindestens eine Profilinformation, die durch eine Interaktion des Clients oder eines weiteren dem Benutzer zugeordneten Clients mit mindestens einem weiteren Server erfasst wurde. Dies erhöht einerseits die Anzahl von Profilinformationen dadurch, dass Profilinformationen unabhängig von dem Client, der aktuell von einem Benutzer genutzt wird, erfasst werden können.

Ferner ermöglicht dies, dass die Profilinformationen unabhängig von dem Server erfasst werden können. Dadurch kann ein besonders aktuelles Profil und somit eine besonders hohe Relevanz der Zusatzinformation erreicht werden. Hierbei kann der Profilserver selbstverständlich in Hardware oder in Software realisiert sein.

Vorteilhafterweise wird eine Reaktion des Benutzers oder des Clients auf die Zusatzinformation automatisch erfasst und ausgewertet und in Abhängigkeit von einem Ergebnis dieser Auswertung automatisch eine Bewertung der Zusatzinformation durchgeführt und/oder eine Aktualisierung des Profils durchgeführt. Dies ermöglicht eine stetige Verbesserung des erfindungsgemäßen Verfahrens dadurch, dass eine Adaption an das Verhalten des Benutzers möglich ist. Nimmt ein Benutzer beispielsweise selten oder nie Kenntnis der ihm angebotenen Zusatzinformationen, was beispielsweise dadurch zu erkennen ist, dass der Benutzer die Aktivierungselemente selten oder nie aktiviert, so kann vorgesehen sein, keine Zusatzinformationen bzw. nur derartige Zusatzinformationen anzuzeigen, die mit besonders hoher Wahrscheinlichkeit für den Benutzer höchst relevant sind.

In einer besonders vorteilhaften Ausführungsform des erfindungsgemäßen Verfahrens wird das Darstellungselement in Abhängigkeit von mindestens einer Profilinformation, einer Eigenschaft der Zusatzinformation, einer Eigenschaft der Teilinformation oder einem mittels des Clients vorgebbaren Kriteriums ausgewählt oder gebildet.
Hierbei ist es besonders vorteilhaft, wenn das Darstellungselement in Abhängigkeit von mehreren derartigen Kriterien ausgewählt oder gebildet wird.

Dies ermöglicht eine besonders flexible Darstellung des der Teilinformation bzw. der Zusatzinformation zugeordneten Aktivierungselements.

Grundsätzlich kann das Darstellungselement automatisch gebildet werden, beispielsweise durch Kombination einzelner, vorgebbarer Komponenten, oder das Darstellungselement kann aus einer vorgegebenen Menge von Darstellungselementen automatisch ausgewählt werden. Wird hierbei eine Eigenschaft der Zusatzinformation berücksichtigt und beschreibt diese Eigenschaft beispielsweise eine Art der Zusatzinformation oder einen thematischen Oberbegriff, so kann folglich die Darstellung des Aktivierungselements und/oder der Teilinformation derart erfolgen, dass an der Darstellung bereits diese Eigenschaft erkenntlich ist.

Ist das Aktivierungselement beispielsweise ein Link und handelt es sich bei der Zusatzinformation um eine Produktinformation, so kann vorgesehen sein, dass die Teilinformation in blauer Schrift dargestellt wird. Handelt es sich bei der Zusatzinformation hingegen um Hintergrundinformation, beispielsweise einem Eintrag aus einer Online-Enzyklopädie, so kann vorgesehen sein, dass die Teilinformation in grüner Schrift und unterstrichen dargestellt wird. Ist die Zusatzinformation eine aktuelle Nachricht, so kann die Teilinformation in roter Schrift und fettgedruckt dargestellt werden. Selbstverständlich können sämtlichen weiteren Parameter statt der Schriftfarbe, Schriftgröße oder Schriftart in Abhängigkeit von derartigen Eigenschaften dargestellt werden. Ist das Aktivierungselement eine Schaltfläche, so kann beispielsweise die Position, Form, Größe oder Beschriftung angepasst werden.

Insbesondere kann auch eine Eigenschaft der Teilinformation derart berücksichtigt werden, dass diese Eigenschaft besonders leicht erkenntlich ist. Auch hierbei kann die Eigenschaft beispielsweise einen bestimmten Themenbereich und damit eine Wahrscheinlichkeit der Kenntnisnahme der Teilinformation und damit auch der der Teilinformation zugeordneten Zusatzinformation durch den Benutzer sein.

Besonders vorteilhaft ist es ferner, wenn das Darstellungselement in Abhängigkeit von einer Profilinformation ausgewählt bzw. erzeugt wird. Dies ermöglicht es beispielsweise, dass eine Darstellung abhängig von einer möglichen Relevanz erfolgt, beispielsweise dadurch, dass Aktivierungselemente für Zusatzinformationen bzw. Teilinformationen aus Themenbereichen, die für den Benutzer als besonders relevant eingestuft werden, besonders auffällig, beispielsweise bezüglich Farbe, Form oder Anordnung, dargestellt werden.

Ferner kann vorgesehen sein, dass mittels des Clients vorgebbar ist, welches Darstellungselement allgemein - beispielsweise immer eine bestimmte Farbe, Größe oder Position - oder welches Darstellungselement bezüglich einer bestimmten Eigenschaft der Zusatzinformation oder der Teilinformation - beispielsweise bestimmte Farbe und Position für Nachrichten - ausgewählt bzw. erzeugt werden soll.

Die Aufgabe wird auch durch ein Client-Server-System der eingangs genannten Art dadurch gelöst, dass das Client-Server-System Mittel zur Durchführung des erfindungsgemäßen Verfahrens aufweist.

Vorteilhafterweise umfasst das Client-Server-System hierbei einen Profilserver zur Verwaltung des mindestens einen Profils. Dies ermöglicht es beispielsweise, dass Profilinformationen von unterschiedlichen Servern in demselben Profil erfasst werden können.

Vorteilhafterweise umfasst das Client-Server-System einen Zusatzinformationsserver, wobei die Auswahl der Zusatzinformationen auf dem Zusatzinformationsserver durchführbar ist. Dies ermöglicht es beispielsweise, dass mehrere unterschiedliche Server auf dieselbe Menge von Zusatzinformationen zugreifen können und somit eine besonders große Auswahl von Zusatzinformationen zur Verfügung steht, so dass eine besonders hohe Relevanz von an den Client bzw. den Benutzer übermittelten Zusatzinformationen gewährleistet sein kann.

Von besonderer Bedeutung ist die Realisierung dieser Erfindung in Form eines Computerprogramms. Dabei ist das Computerprogramm auf mindestens einem Rechengerät bzw. einem Computer, insbesondere auf einem Client oder auf einem Server, ablauffähig und zur Ausführung des erfindungsgemäßen Verfahrens programmiert. Insbesondere können zur Ausführung des erfindungsgemäßen Verfahrens Teile des Computerprogramms auf unterschiedlichen Computern, insbesondere auf unterschiedlichen Clients und unterschiedlichen Servern ablaufen. Die Erfindung wird also durch das Computerprogramm realisiert, so dass dieses Computerprogramm in gleicher Weise die Erfindung darstellt wie das Verfahren, zu dessen Ausführung das Computerprogramm geeignet ist.

Das Computerprogramm ist vorzugsweise auf einem Speicherelement abgespeichert. Ein Speicherelement kann insbesondere ein Random-Access-Memory, ein Read-Only-Memory oder ein Flash-Memory sein.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Es zeigen:
- Fig. 1: ein Client-Server-System gemäß einer ersten Ausführungsform;
- Fig. 2: ein Client-Server-System gemäß einer zweiten Ausführungsform und
- Fig. 3: ein Ablaufdiagramm des erfindungsgemäßen Verfahrens gemäß einer bevorzugten Ausführungsform.

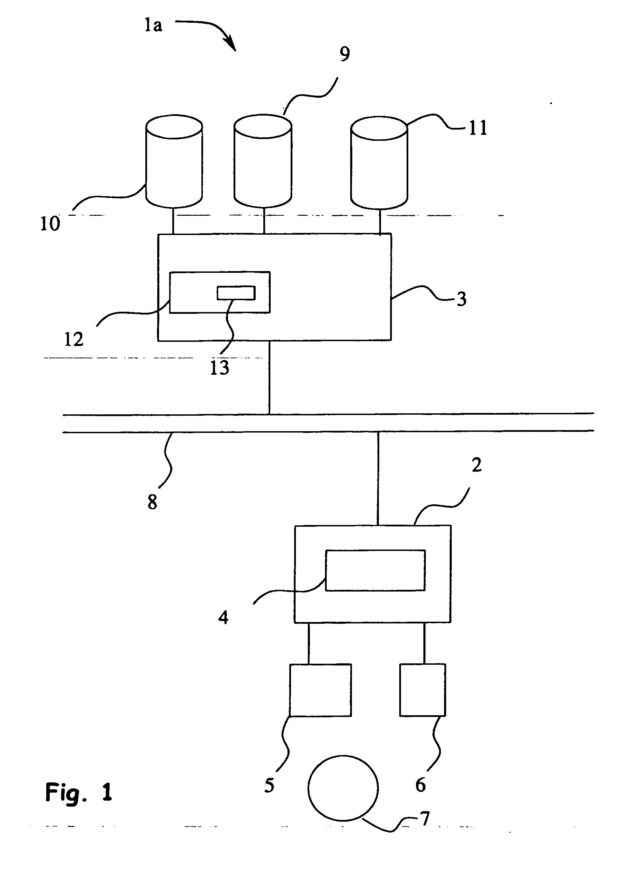

In Fig. 1 ist ein Client-Server-System 1a dargestellt, das einen Client 2 und einen Server 3 aufweist. Auf dem Client 2 ist ein erstes Softwareelement 4, beispielsweise ein Browser, installiert. Dem Client 2 sind ferner ein Display 5 und ein Zeigegerät 6 zugeordnet, die einem Benutzer 7 eine Interaktion mit dem Client 2 ermöglichen.

Der Client 2 und der Server 3 sind mit einem Kommunikationsnetzwerk 8 verbunden. Das Kommunikationsnetzwerk 8 ist beispielsweise als das Internet, ein Mobilfunknetzwerk oder als ein WLAN (Wireless Local Area Network) ausgebildet.

Dem Server 3 sind eine Profildatenbank 9, eine Informationsdatenbank 10 und eine Zusatzinformationsdatenbank 11 zugeordnet. Auf der Informationsdatenbank 10 sind beispielsweise Informationen abgespeichert, die von dem Server 3 an den Client 2 in Form einer Netzwerkseite übermittelt werden können. Insbesondere können auf der Informationsdatenbank 10 bereits erzeugte Netzwerkseiten abgespeichert sein. Die Informationsdatenbank 10 kann ferner Datenströme, wie beispielsweise Videoclips oder Musikdateien, enthalten.

In der Profildatenbank 9 sind Profile mehrerer Clients bzw. mehrerer Benutzer 7 abgespeichert. Hierbei enthält jedes Profil eine oder mehrere Profilinformationen, mittels derer auf mögliche Interessen des jeweiligen Benutzers 7 bzw. Clients 2 geschlossen werden kann.

In der Zusatzinformationsdatenbank 11 sind mögliche Zusatzinformationen abgespeichert. Hierbei können zu jeder Zusatzinformation eine oder mehrere diese zusatzinformation charakterisierenden Eigenschaften abgespeichert sein.

In einem dem Server 3 zugeordneten Speicherbereich eines Speicherelements 12 ist ein zweites Softwareelement 13 abgespeichert, in dem das erfindungsgemäße Verfahren implementiert ist. Es ist insbesondere vorstellbar, dass auf dem Client ein drittes Softwareelement installiert ist, in dem ein Teil des erfindungsgemäßen Verfahrens, beispielsweise die Funktionalität der Auswahl des Darstellungselements, implementiert ist, so dass das erfindungsgemäße Verfahren durch ein Zusammenwirken des zweiten Softwareelements 13 und des dritten Softwareelements realisiert würde. Wird das Aktualisierungselement durch das erste Softwareelement, beispielsweise durch den Browser, realisiert, so ist das erfindungsgemäße Verfahren durch eine Ausführung des entsprechend programmierten ersten Softwareelements 4, des entsprechend programmierten zweiten Softwareelements 13 sowie des entsprechend programmierten dritten Softwareelements realisierbar. Selbstverständlich ist es vorstellbar, dass das erfindungsgemäße Verfahren in eine Vielzahl weiterer Komponenten, die beispielsweise einzelne Funktionalitäten realisieren, zerlegt ist und diese auf weiteren Komponenten eines diese Komponenten umfassenden Client-Server Systems, insbesondere eines Kommunikationsnetzwerks, abgespeichert sind und/oder ausgeführt werden.

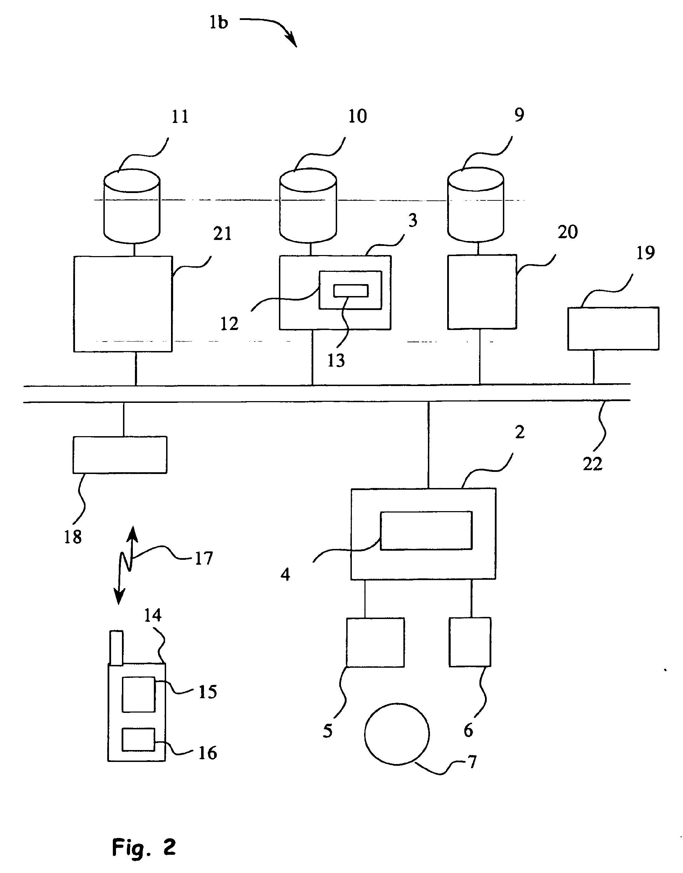

In Fig. 2 ist eine zweite Ausführungsform eines Client-Server-Systems 1b dargestellt. Hierbei sind Komponenten des Client-Server-Systems 1b, die Komponenten des in Fig. 1 dargestellten Client-Server-Systems 1a entsprechen, mit denselben Bezugszeichen versehen.

Das Client-Server-System 1b weist einen einem Benutzer 7 zugeordneten Client 2 auf, auf dem das erste Softwarelement 4, beispielsweise ein Browser, abläuft. Der Client 2 kann beispielsweise als Personal Computer oder als PDA (Personal Digital Assistant) ausgebildet sein. Ein weiterer, beispielsweise als Smartphone 14 ausgebildeter Client ist ebenfalls dem Benutzer 7 zugeordnet. Das Smartphone 14 weist ein Display 15 sowie eine Tastatur 16 auf. Ein Mobilfunknetz 17 ermöglicht eine Kommunikation des Smartphones 14 mit einem Service Provider 18.

Das Client-Server-System 1b weist ferner eine Suchmaschine 19, einen Server 3, einen Profilserver 20 sowie einen Zusatzinformationsserver 21 auf. Dem Server 3 ist eine Informationsdatenbank 10, dem Profilserver 20 eine Profildatenbank 9 und dem Zusatzinformationsserver 21 eine Zusatzinformationsdatenbank 11 zugeordnet. Der Client 2, der Service Provider 18, die Suchmaschine 19, der Server 3, der Profilserver 20 und der Zusatzinformationsserver 21 sind mit einem als Internet 22 ausgebildeten Kommunikationsnetzwerk verbunden. Zur Ausführung des erfindungsgemäßen Verfahrens können zusätzlich zu dem ersten Softwareelement 4 sowie dem zweiten Softwareelement 13 insbesondere auf dem Profilserver 20 und dem Zusatzinformationsserver 21 Softwareelemente abgespeichert sein, die einzelne Funktionalitäten des erfindungsgemäßen Verfahrens realisieren, wenn sie ausgeführt werden. Beispielsweise kann die Auswahl des Profils durch den Profilserver 20 und die Auswahl der Zusatzinformation durch den Zusatzinformationsserver 21 durchgeführt werden.

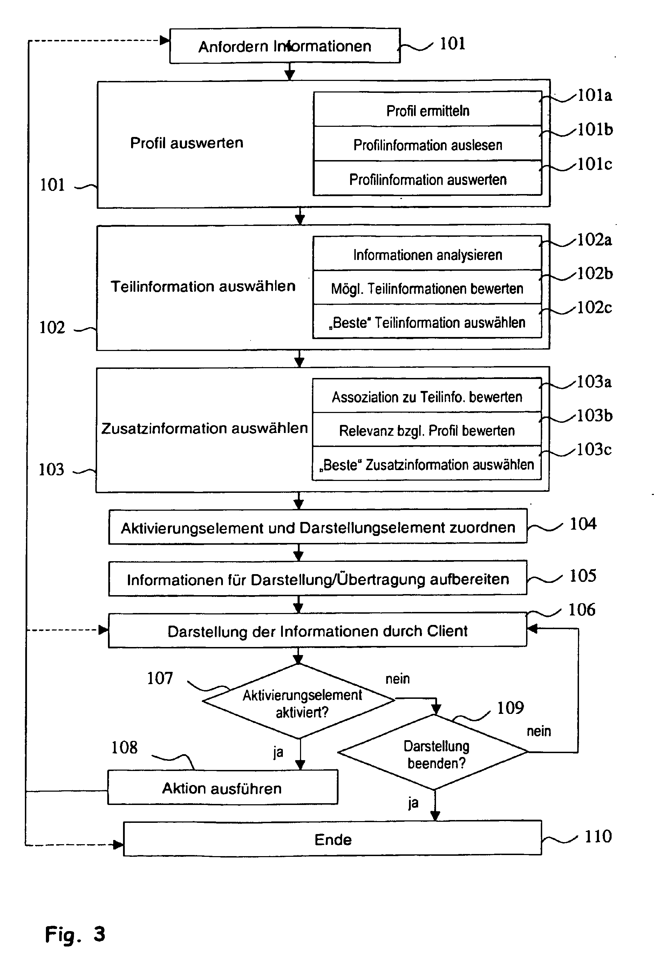

In Fig. 3 ist eine mögliche Ausführungsform des erfindungsgemäßen Verfahrens in Form eines Ablaufdiagramms schematisch dargestellt.

Das Verfahren beginnt in einem Schritt 100, in dem mittels des Clients 2 Informationen von dem Server 3 angefordert werden. Dies kann beispielsweise durch die Eingabe einer auf dem Server 3 abgespeicherten Netzwerkseite zugeordneten URL erfolgen. Es ist ferner möglich, Informationen von dem Server 3 dadurch anzufordern, dass mittels des Clients 2 ein Hyperlink bzw. Link, der auf einer an den Client 2 bereits übermittelten Netzwerkseite dargestellt ist, aktiviert wird.

In einem Schritt 101 wird ein dem Benutzer 7 bzw. dem Client 2 zugeordnetes Profil ausgewertet. In einem Teilschritt 101a wird zunächst eine Anfrage an die Profildatenbank 9 gestellt. Hierzu wird eine dem Client 2 oder dem Benutzer 7 zugeordnete Kennung an die Profildatenbank 9 übermittelt. Eine derartige Kennung kann beispielsweise aus einem Cookie gewonnen werden, das automatisch in dem Schritt 100 bei der Anforderung der Informationen von dem Client 2 an den Server 3 übermittelt wurde. Es ist ferner möglich, dass automatisch bei der Anforderung der Informationen von dem Client 2 eine diesem zugeordnete Softwarekennung, beispielsweise eine Seriennummer, oder eine Hardwarekennung, beispielsweise die Seriennummer einer Netzwerkkarte, eine dem Client 2 zugeordnete IP-Nummer oder eine von dem Browser 4 erzeugte Kennung automatisch an den Server 3 übermittelt wird.

In Abhängigkeit von der Kennung wird von der Profildatenbank 9 oder dem Profilserver 20 ein dem Benutzer oder dem dem Benutzer zugeordneten Client zugeordnetes Profil ausgewählt und an den Server 3 übermittelt.

Die Profildatenbank 9 kann wie in Figur 1 dargestellt, direkt mit dem Server 3 verbunden sein. Es ist jedoch ebenso wie in Fig. 2 dargestellt möglich, dass die Profildatenbank 9 über einen Profilserver 20 erreichbar ist. Insbesondere ist es vorstellbar, dass die Menge von Profilen nicht in einer Profildatenbank 9 abgespeichert ist, sondern beispielsweise in mehreren Profildatenbanken 9 und insbesondere auf mehreren Profilservern 20 verteilt ist. Hierbei kann von dem Server 3 automatisch die Kennung an alle Profilserver 20 übermittelt werden. Der Profilserver 20, der ein hierzu passendes Profil bereithält, kann dieses dann beispielsweise über das Internet 22 an den Server 3 senden.

In einem Teilschritt 101b wird mindestens eine Profilinformation aus dem ausgewählten Profil ausgelesen. Eine derartige Profilinformation kann beispielsweise ein persönliches Datum wie Alter, Geschlecht, Wohnort, Beruf oder eine sonstige Information enthalten, aus der auf ein Interesse des Benutzers 7 geschlossen werden kann. Derartige Profilinformationen können beispielsweise Produkte beschreiben, die der Benutzer 7 bei einem Online-Shop in einen Warenkorb gelegt, aber nicht gekauft hat. Eine Profilinformation kann beispielsweise auch eine bestimmte Branche bezeichnen, der Produkte zugeordnet sind, die von dem Benutzer 7 bei einer Produktsuchmaschine gesucht wurden. Eine Profilinformation kann ferner auch einen Suchbegriff umfassen, den der Benutzer 7 mittels des Clients 2 an eine Suchmaschine, beispielsweise die Suchmaschine 19, übermittelt hat.

In einem Teilschritt 101c wird mindestens eine Profilinformation ausgewertet. Hierbei werden die vorhandenen Profilinformationen beispielsweise in unterschiedliche Kategorien einsortiert, wobei jeder Kategorie ein Gewicht zugeordnet ist, das eine potentielle Relevanz kennzeichnet. Beispielsweise kann vorgesehen sein, dass Produkten, nach denen in einer Produktsuchmaschine gesucht wurde, eine höhere Relevanz zugeordnet wird, als ein Themenbereich, die den thematischen Fokus einer Online-Zeitung, die von dem Benutzer 7 abonniert ist, beschreibt.

Für die Auswahl der Profilinformationen werden beispielsweise Verfahren der künstlichen Intelligenz, wie regelbasierte Expertensysteme, eingesetzt.

Insbesondere wird in dem Schritt 101c eine Menge von Eigenschaften ermittelt, mittels derer eine Relevanz einer Teilinformation für den Benutzer 7 festgestellt werden kann.

In einem Schritt 102 wird aus den Informationen eine Teilinformation ausgewählt. Hierbei werden in einem Teilschritt 102a zunächst die von dem Client 2 angeforderten Informationen analysiert. Handelt es sich bei diesen Informationen beispielsweise um Textinformationen, so kann mittels einer syntaktischen Analyse zunächst ermittelt werden, welche Zeichenketten sich als mögliche Teilinformationen eignen. Dies können insbesondere einzelne Wörter sein. Mittels einer semantischen Analyse kann dann der Inhalt der möglichen Teilinformationen ermittelt werden.

Handelt es sich bei den Informationen beispielsweise um einen einen Spielfilm realisierenden Datenstrom, so kann der Datenstrom nach bestimmten Positionen untersucht werden, an denen beispielsweise ein bestimmtes Produkt dargestellt ist oder an denen ein bestimmter Inhalt wiedergegeben wird.

In einem Teilschritt 102b werden die möglichen Teilinformationen bewertet. Hierbei können Eigenschaften der möglichen Teilinformationen, beispielsweise eine Wortart - Substantiv, Prädikat, Adjektiv - ein Inhalt, eine Position innerhalb der dargestellten bzw. darzustellenden Informationen oder eine Schriftart, ermittelt werden und anhand vorgebbarer Kriterien automatisch entschieden werden, welche Eigenschaften sich einerseits besonders gut prinzipiell als Teilinformation eignet - beispielsweise die Position innerhalb der Informationen -, welche Teilinformationen von dem Benutzer mit hoher Wahrscheinlichkeit wahrgenommen werden und welche Teilinformationen für den Benutzer möglicherweise besonders relevant sind. Insbesondere können hierbei den möglichen Teilinformationen Eigenschaften derart zugeordnet werden, dass durch eine Auswertung dieser Eigenschaften, die beispielsweise gewichtet sein können, eine Ordnungsrelation auf der Menge der möglichen Teilinformationen abbildbar ist. Hierbei kann die Ordnungsrelation derart ausgebildet sein, dass eine Teilinformation dann ausgewählt wird, wenn dieser ein hoher numerischer Wert zugeordnet ist und ggfs. dadurch eine hohe wahrscheinliche Relevanz einer dieser Teilinformation zuzuordnenden Zusatzinformation erreicht werden kann.

In einem Teilschritt 102c werden aus der Menge der möglichen Teilinformationen eine oder mehrere Teilinformationen ausgewählt, denen mit hoher Wahrscheinlichkeit für den Benutzer 7 relevante Zusatzinformationen zugeordnet werden können. Beispielsweise wird eine Teilinformation dann ausgewählt, wenn sie eine besonders hohe thematische Ähnlichkeit mit einer besonders hoch bewerteten Kategorie des Profils aufweist. Sind die Informationen beispielsweise als Text in einer Netzwerkseite darstellbar, so können Teilinformationen ausgewählt werden, die einen Oberbegriff zu einem Themenbereich darstellen, der aufgrund der Auswertung des dem Benutzer 7 zugeordneten Profils als für diesen relevant erscheint.

In einem Schritt 103 wird zu der ausgewählten Teilinformation eine Zusatzinformation ausgewählt. Hierbei wird beispielsweise eine Anfrage an den Zusatzinformationsserver 21 gerichtet. Zusammen mit der Anfrage wird die Teilinformation oder eine Beschreibung der Teilinformation an den Zusatzinformationsserver 21 übermittelt.

In einem Teilschritt 103a überprüft der Server 3 oder der Zusatzinformationsserver 21, welche beispielsweise in der Zusatzinformationsdatenbank 11 abgespeicherten Zusatzinformationen mit der Teilinformation bzw. der Beschreibung der Teilinformation assoziiert werden können. Beispielsweise sind die Teilinformationen klassifiziert und eine Zusatzinformation wird ausgewählt, wenn sie in der gleichen Klasse wie die Teilinformation ist. Dies bedeutet, dass die möglichen Zusatzinformationen bezüglich des Assoziationsgrades zumindest implizit bewertet werden.

Besonders vorteilhaft ist es hierbei, wenn eine Zusatzinformation in Abhängigkeit von einer Auswertung des Profils ausgewählt wird. In einem Teilschritt 103b deshalb eine Relevanz einer oder mehrerer möglicher Zusatzinformationen bezüglich des Profils bewertet.
Somit kann nochmals eine mögliche Relevanz erhöht werden. Beispielsweise kann damit erreicht werden, dass eine Information zu einem Produkt, das der Benutzer 7 bereits erworben hat, nicht mehr angezeigt wird, obwohl der Benutzer 7 sich weiterhin für einen Themenbereich, dem auch das gekaufte Produkt zugeordnet ist, sehr interessiert.

In einem Schritt 104 werden ein Aktivierungselement und ein Darstellungselement der Teilinformation zugeordnet. Beispielsweise wird hierbei ein Link, der die URL einer Netzwerkseite, auf der die Zusatzinformation abgespeichert ist, realisiert und der Teilinformation derart zugeordnet, dass eine Aktivierung dieses Links eine Anforderung dieser Netzwerkseite bewirkt. Hierbei ist das Aktivierungselement folglich der Link, die dem Aktivierungselement zugeordnete Aktion ist das Anfordern der die Zusatzinformation enthaltenden Netzwerkseite und das Darstellungselement kann beispielsweise vorsehen, dass die Teilinformation in einer bestimmten Farbe und unterstrichen dargestellt wird, so dass das vorliegen eines Links zu einer Zusatzinformation erkennbar wird.

Ein Aktivierungselement kann beispielsweise auch vorsehen, dass durch Bewegung des zeigegeräts 6 über einen Bereich, der beispielsweise durch die graphische Repräsentation der Teilinformation in dem Browser 4 bestimmt wird, in einem dafür vorgesehenen Bereich des Browsers 4 eine Information eingeblendet wird, die die Zusatzinformation selbst repräsentiert, einen Link zu der Zusatzinformation darstellt oder eine kurze Beschreibung der Zusatzinformation anzeigt. Darstellungselemente können hierbei beispielsweise eine Einfärbung der Teilinformationen vorsehen.

Ist die Teilinformation eine Zeichenkette, beispielsweise ein Wort, so kann die Teilinformation beispielsweise kursiv, fettgedruckt oder in einer anderen oder größeren Schriftart dargestellt werden. Ist die Teilinformation Teil eines Datenstroms, so kann vorgesehen sein, dass eine Schaltfläche eingeblendet wird, die mittels des Zeigegeräts 6 aktivierbar ist. Die Schaltfläche kann beispielsweise eine Kurzbeschreibung der durch eine Aktivierung der Schaltfläche anforderbaren bzw. darstellbaren Zusatzinformation enthalten.

Hierbei kann das Darstellungselement insbesondere auch in Abhängigkeit von einer Eigenschaft der Zusatzinformation, beispielsweise einem Themenbereich, einer Art der zugrunde liegenden Daten - Video, Audio, Text -, einer Art der Zusatzinformation - Nachrichten, Produktinformationen, technische Informationen oder Verfügbarkeit - oder einer möglichen Relevanz für den Benutzer, ausgewählt beziehungsweise erzeugt werden. Ebenso kann hierbei eine Eigenschaft der Teilinformation, beispielsweise ein Themenbereich, einer Art der Teilinformation - Text oder Bild - oder einer Position innerhalb der dargestellten Informationen, berücksichtigt werden.

Ferner kann erneut das Profil herangezogen werden, um beispielsweise eine von dem Benutzer bevorzugte Darstellungsart zu ermitteln oder um eine möglicherweise besonders hohe oder besonders geringe Relevanz für den Benutzer bereits durch die Darstellung zu signalisieren. Außerdem kann auf dem Client beispielsweise eine Information darüber abgelegt sein, welche Darstellung der Benutzer bevorzugt. Dies kann insbesondere auch derart differenziert sein, dass daraus ersichtlich ist, dass für eine bestimmte Art der Zusatzinformation eine bestimmte Art der Darstellung des Aktivierungselements bevorzugt wird.

Es ist insbesondere vorstellbar, dass durch die Aktivierung eines Aktivierungselements die Zusatzinformation an einen anderen, dem Benutzer 7 zugeordneten Client, beispielsweise dem Smartphone 14, übermittelt und durch diesen dargestellt wird. Beispielsweise ist es vorstellbar, dass bei betrachten eines Videofilm oder einer Sendung des Internet-TV an einer bestimmten Position das Vorhandensein einer Zusatzinformation angezeigt wird. Der Benutzer 7 kann dann durch aktivieren des dargestellten Aktivierungselements, beispielsweise einer Schaltfläche, die Zusatzinformation anfordern, die dann von dem Server 3 an das Smartphone 14 übermittelt wird.

In einem Schritt 105 werden die Informationen aufbereitet und an den Client 2 übermittelt. Hierzu werden beispielsweise die Darstellungselemente in die Informationen derart aufgenommen, dass bei einer Darstellung der Teilinformationen das Vorliegen einer Zusatzinformation erkennbar ist.

In einem Schritt 106 werden die Informationen dem Benutzer dargestellt. Dies kann beispielsweise mittels des ersten Softwareelements 4, beispielsweise eines Browsers, geschehen. Wird mittels des Browsers ein Ausschnitt der Informationen dargestellt, die eine Teilinformation enthalten, so wird diese entsprechend dem Aktivierungselement und dem Darstellungselement angezeigt.

In einem Schritt 107 wird geprüft, ob der Benutzer ein der Teilinformation zugeordnetes Aktivierungselement aktiviert.

Ist dies der Fall, so wird in einem Schritt 108 die zugehörige Aktion ausgeführt. Dies kann beispielsweise die Darstellung einer bereits übermittelten Zusatzinformation sein. Insbesondere wenn die Zusatzinformation ein größeres Datenvolumen umfasst, ist es vorstellbar, dass die Aktion zunächst die Anforderung der Zusatzinformation, beispielsweise bei dem Zusatzinformationsserver 21, bewirkt. Diese wird dann von dem Zusatzinformationsserver 21 an den Client 2 übertragen und mittels des Browsers dem Benutzer 7 dargestellt.

Wird die Zusatzinformation beispielsweise lediglich eingeblendet, so kann das Verfahren dann in dem Schritt 106 fortgesetzt werden, bis beispielsweise ein weiters, einer Teilinformation zugeordnetes Aktivierungselement aktiviert wird.

In einem Schritt 109 wird geprüft, ob die Darstellung der Informationen beendet werden soll, beispielsweise weil der Browser deaktiviert wird oder von einem anderen Server Informationen angefordert werden und das erfindungsgemäße Verfahren mit Informationen dieses Servers nicht durchführbar ist, beispielsweise weil auf diesem Server kein entsprechendes Softwareelement 13 installiert ist und/oder weil der Betreiber dieses Servers eine Durchführung des erfindungsgemäßen Verfahrens nicht wünscht.

Das Verfahren endet dann in einem Schritt 110.

Die Zusatzinformationen selbst können wieder als Informationen betrachtet werden, mittels derer das erfindungsgemäße Verfahren durchführbar ist. Dies bedeutet, dass bei einer Anforderung oder Übermittlung der Zusatzinformationen innerhalb der Zusatzinformationen nach Teilinformationen gesucht wird und diesen weitere Zusatzinformationen zugeordnet werden. Das erfindungsgemäße Verfahren eignet sich folglich insbesondere zu einer rekursiven Durchführung bezüglich der Anforderung von Zusatzinformationen, wenn diese ebenfalls als Informationen betrachtet werden. Dies ist beispielsweise in Figur 3 dadurch angedeutet, dass von dem Schritt 108 auch wieder zu dem Schritt 100 verzweigt werden kann.

Es sind eine Vielzahl weiterer Ausführungsformen bzw. Abwandlungen der in Fig. 3 dargestellten Ausführungsform des Verfahrens vorstellbar. Beispielsweise können einzelne Schritte oder Teilschritte entfallen oder weitere Verfeinerungen hinzugenommen werden.

Beispielsweise kann das Verfahren auch ohne den Schritt 103b durchgeführt werden. Außerdem kann auf eine Vielzahl, dem Fachmann beispielsweise aus dem Bereich des "Information Retrievel" bekannten Techniken zurückgegriffen werden, um eine möglichst aussagekräftige Profilinformation auszuwählen oder um eine Assoziation zwischen einer möglichen Teilinformation und einer möglichen Zusatzinformation herzustellen und dann das Paar Teilinformation-Zusatzinformation auszuwählen, das bezüglich vorgebbarer Kriterien die höchste Bewertung erhält und beispielsweise die höchste Wahrscheinlichkeit für eine besonders hohe Relevanz besitzt und/oder die höchste Wahrscheinlichkeit dafür besitzt, dass der Benutzer sich durch die Zusatzinformation unterstützt und nicht gestört fühlt.

Es ist ferner möglich, nach dem Schritt 103 zu prüfen, ob überhaupt eine Zusatzinformation gefunden wurde bzw. ob diese eine ausreichende mögliche Relevanz aufweist. Ist dies nicht der Fall, so kann zu dem Schritt 102 zurückverzweigt werden und eine andere Teilinformation ausgewählt werden. Der Schritt 103 wird dann erneut ausgeführt und es wird dann zu dieser Teilinformation eine Zusatzinformation ausgewählt.

Es ist auch möglich, dass zunächst eine Zusatzinformation beispielsweise in Abhängigkeit von dem Profil ausgewählt wird. Wird eine Zusatzinformation mit besonders hoher Relevanz gefunden, so kann anschließend innerhalb der Informationen nach einer Teilinformation gesucht werden, die eine möglichst große Assoziation zu der gefundenen Zusatzinformation aufweist. Wird keine derartige Teilinformation gefunden, so kann eine andere Zusatzinformation ausgewählt und erneut nach einer hierzu passenden Teilinformation gesucht werden. Dies bedeutet also, dass beispielsweise die Schritt 102 und 103 auch in umgekehrter Reihenfolge ausgeführt werden könnnen.

Es ist ferner möglich, das Verfahren dadurch zu starten, dass eine e-mail über einen e-mail-Server an den Client 2 gesendet wird. Die e-mail kann beispielsweise automatisch von dem e-mail-Server erzeugt oder von einem anderen Benutzer mittels eines diesem zugeordneten Clients verfasst sein. Hierbei wird von dem e-mail-Server ein dem Empfänger der e-mail, also beispielsweise dem Benutzer 7, zugeordnetes Profil in dem Schritt 101 ermittelt und ausgewertet. Hierbei kann als Kennung beispielsweise die e-mail-Adresse des Benutzers 7 herangezogen werden. Die e-mail wird dann in dem Schritt 105 durch entsprechende Kenntlichmachung der Teilinformationen aufbereitet und an den Client 2 gesendet.

## Patentansprüche

1. Verfahren zur Auswahl und Darstellung mindestens einer Zusatzinformation in Abhängigkeit von von einem Server (3) an einen Client (2) über ein Kommunikationsnetzwerk (8) zu übermittelnden oder übermittelten Informationen, bei dem
- ein dem Client (2) zugeordnetes Profil oder ein einem Benutzer (7) des Clients (2) zugeordnetes Profil automatisch ausgewertet wird und
- eine Zusatzinformation aus einer vorgebbaren Menge von Zusatzinformationen ausgewählt wird,
**dadurch gekennzeichnet, dass**
- in Abhängigkeit von der Auswertung des Profils automatisch mindestens eine Teilinformation aus den Informationen ausgewählt wird,
- die Zusatzinformation in Abhängigkeit von der Auswertung mindestens einer Eigenschaft der Teilinformation automatisch ausgewählt wird,
- ein aktivierbares Aktivierungselement der Teilinformation automatisch zugeordnet wird, wobei im Falle einer Aktivierung des Aktivierungselements automatisch eine der Zusatzinformation zugeordnete Aktion durchgeführt wird,
- dem Aktivierungselement ein Darstellungselement automatisch zugeordnet wird, mittels dessen mindestens ein Parameter bezüglich der Darstellung des Aktivierungselements auf dem Client (2) vorgebbar ist, und
- auf dem Client das Aktivierungselement dargestellt wird.

2. Verfahren nach Anspruch 1, **dadurch gekennzeichnet, dass** das Darstellungselement eine Eigenschaft der Darstellung der Teilinformation beschreibt.

3. Verfahren nach Anspruch 1 oder 2, **dadurch gekennzeichnet, dass** die Informationen in Form einer elektronischen Postsendung, einer elektronischen Kurzmitteilung, einer Netzwerkseite oder eines Datenstroms über das Kommunikationsnetzwerk (8), insbesondere über das Internet (22), übertragen werden.

4. Verfahren nach einem der vorangehenden Ansprüche, **dadurch gekennzeichnet, dass** die Zusatzinformation an den Client (2) übermittelt wird, wenn das Aktivierungselement aktiviert wird.

5. Verfahren nach einem der vorangehenden Ansprüche,
**dadurch gekennzeichnet,**
- **dass** die Auswahl der Teilinformation mittels eines dem Server (3) zugeordneten Auswahlmittels durchgeführt wird und die Informationen zusammen mit dem Aktivierungselement an den Client (2) übermittelt werden oder
- **dass** die Informationen an den Client (2) übermittelt werden, die Auswahl der Teilinformation auf dem Client (2) durchgeführt wird, eine Eigenschaft der ausgewählten Teilinformation an einen Zusatzinformationsserver übermittelt wird, von dem Zusatzinformationsserver eine Zusatzinformation ausgewählt wird, die Zusatzinformation oder zumindest die Verfügbarkeit einer Zusatzinformation an den Client (2) übermittelt wird und auf dem Client (2) das Aktivierungselement angezeigt wird.

6. Verfahren nach einem der vorangehenden Ansprüche, **dadurch gekennzeichnet, dass** das Aktivierungselement oder das Darstellungselement auf dem Server (3) der Teilinformation zugeordnet wird oder dass das Aktivierungselement oder das Darstellungselement auf dem Client (2) der Teilinformation zugeordnet wird.

7. Verfahren nach einem der vorangehenden Ansprüche, **dadurch gekennzeichnet, dass** die Teilinformation ausgewählt wird in Abhängigkeit
- von mindestens einer Eigenschaft mindestens einer möglichen Zusatzinformation,
- von einer Position innerhalb der Informationen oder
- von einer Eigenschaft der Informationen oder einer Eigenschaft einer Untermenge der Informationen, innerhalb der sich die Teilinformation befindet.

8. Verfahren nach einem der vorangehenden Ansprüche, **dadurch gekennzeichnet, dass** die Zusatzinformation ausgewählt wird in Abhängigkeit
- von einer Auswertung des Profils,
- von einer Bewertung der zur Auswahl stehenden Zusatzinformation,
- von einer den Informationen zugeordneten Eigenschaft, wobei die Eigenschaft einen Inhalt, einen Themenbereich, eine Herkunft oder eine Aktualität beschreibt der
- von einer äußeren Bedingung, wobei die äußere Bedingung ein aktuelles Datum, eine aktuelle Tageszeit, einen aktuellen Aufenthaltsort des Benutzers (7), einen aktuellen Standort des Client (2), eine Temperatur, einen aktuellen Trend oder ein aktuelles Geschehen beschreibt.

9. Verfahren nach einem der vorangehenden Ansprüche, **dadurch gekennzeichnet, dass** die Teilinformation einer ersten Klasse zugeordnet wird, mindestens eine auswählbare Zusatzinformationen mindestens einer zweiten Klasse zugeordnet ist und die mindestens eine Zusatzinformation ausgewählt wird, wenn eine vorgebare Ähnlichkeit zwischen der ersten Klasse und der zweiten Klasse besteht, wobei die erste Klasse und die zweite Klasse nicht notwendig verschieden sind.

10. Verfahren nach einem der vorangehenden Ansprüche, **dadurch gekennzeichnet, dass** mittels einer Bewegung eines dem Client (2) zugeordneten Zeigegeräts in oder über einen bezüglich der Darstellung der Teilinformation zugeordneten Bereich und/oder mittels einer Betätigung eines der Teilinformation zugeordneten Schalters das Aktivierungsmittel aktiviert wird.

11. Verfahren nach einem der vorangehenden Ansprüche, **dadurch gekennzeichnet, dass** eine dem Benutzer (7) oder dem Client (2) zugeordnete Kennung erfasst wird und in Abhängigkeit von der Kennung das dem Benutzer (7) oder dem Client (2) zugeordnete Profil automatisch ermittelt wird, wobei die Kennung aus einer Registrierungskennung, einer Kreditkartennummer, einer EC-Kartennummer, einer in einem Cookie abgespeicherten Zeichenfolge, einer Einwahl-Kennung, einer Gerätenummer oder einer Software-Kennung gebildet wird.

12. Verfahren nach einem der vorangehenden Ansprüche, **dadurch gekennzeichnet, dass** das Profil mindestens eine Profilinformation enthält bezüglich
- einer Eigenschaft von angeforderten oder übermittelten Informationen,
- eines bestellten oder gekauften Produkts,
- eines nicht gekauften Produkts,
- des Kaufverhaltens des Benutzers (7),
- eines Interessengebiets,
- eines dem Benutzer (7) zugeordneten personenbezogenen Datums,
- eines Suchbegriffs, der von dem Benutzer (7), dem Client (2) oder einem anderen dem Benutzer (7) zugeordneten Client (2) an eine Suchmaschine oder eine Produktsuchmaschine übermittelt wurde oder
- einer Reaktion des Benutzers (7) oder eines dem Benutzer (7) zugeordneten Clients (2) bezüglich einer Zusatzinformation.

13. Verfahren nach einem der vorangehenden Ansprüche, **dadurch gekennzeichnet, dass** das Profil von einem Profilserver verwaltet wird und mindestens eine Profilinformation umfasst, die durch eine Interaktion des Clients (2) oder eines weiteren dem Benutzer (7) zugeordneten Clients (2) mit mindestens einem weiteren Server (3) erfasst wurde.

14. Verfahren nach einem der vorangehenden Ansprüche, **dadurch gekennzeichnet, dass** eine Reaktion des Benutzers (7) oder des Clients (2) bezüglich der Zusatzinformation automatisch erfasst und ausgewertet wird und in Abhängigkeit von einem Ergebnis dieser Auswertung automatisch
- eine Bewertung der Zusatzinformation durchgeführt wird oder
- eine Aktualisierung des Profils durchgeführt wird.

15. Verfahren nach einem der vorangehenden Ansprüche, **dadurch gekennzeichnet, dass** das Darstellungselement in Abhängigkeit von mindestens einer Profilinformation, einer Eigenschaft der Zusatzinformation, einer Eigenschaft der Teilinformation oder einem mittels des Clients (2) vorgebbaren Kriteriums ausgewählt oder gebildet wird.

16. Client-Server System (1a; 1b) umfassend einen einem Benutzer (7) zugeordneten, mit einem Kommunikationsnetzwerk verbindbaren Client (2) und einen mit dem Kommunikationsnetzwerk verbindbaren Server (3), **dadurch gekennzeichnet, dass** das Client-Server-System (1a; 1b) Mittel zur Durchführung eines Verfahrens nach einem der Ansprüche 1 bis 15 aufweist.

17. Client-Server-System (1a; 1b) nach Anspruch 16, **dadurch gekennzeichnet, dass** das Client-Server-System (1a; 1b) einen Profilserver (20) zur Verwaltung des mindestens einen Profils umfasst.

18. Client-Server-System nach Anspruch 16 oder 17, **dadurch gekennzeichnet, dass** das Client-Server-System (1a; 1b) einen Zusatzinformationsserver (21) umfasst und die Auswahl der Zusatzinformation auf dem Zusatzinformationsserver (21) durchführbar ist.

19. Computerprogramm, das auf einem Client-Server System (1a; 1b) auflauffähig ist, **dadurch gekennzeichnet, dass** ein Verfahren nach einem der Ansprüche 1 bis 15 ausgeführt wird, wenn das Computerprogramm auf dem Client-Server System (1a; 1b) abläuft.

20. Computerprogramm nach Anspruch 19, **dadurch gekennzeichnet, dass** das Computerprogramm auf einem Speicherelement abgespeichert ist, wobei das Speicherelement als ein Read-Only-Memory (ROM), ein Random-Access-Memory (RAM), eine Festplatte (hard disc), eine Compact Disc (CD), eine Digital Versatile Disc (DVD) oder mindestens ein mindestens einer Komponente des Client-Server Systems (1a; 1b) zugeordneter Speicherbereich ausgebildet ist.

## Claims

1. Method for selecting and presenting at least one additional piece of information as a function of information which is to be transmitted or has been transmitted from a server (3) to a client (2) via a communication network (8), in which
- a profile coordinated with the client (2) or a profile coordinated with a user (7) of the client (2) is automatically evaluated and
- an additional piece of information is selected from a specifiable quantity of additional pieces of information,
**characterized in that**
- depending on the evaluation of the profile, at least one part of the information is automatically selected from the information,
- the additional piece of information is automatically selected as a function of the evaluation of at least one property of the part of the information,
- an activatable activation element is automatically coordinated with the part of the information, an action coordinated with the additional piece of information automatically being carried out in the case of activation of the activation element,
- a presentation element is automatically coordinated with the activation element, by means of which presentation element at least one parameter can be specified with regard to the presentation of the activation element at the client (2), and
- the activation element is presented at the client.

2. Method according to Claim 1, **characterized in that** the presentation element describes a property of the presentation of the part of the information.

3. Method according to Claim 1 or 2, **characterized in that** the information is transmitted in the form of an e-mail, a short message service, a network page or a data stream via the communication network (8), in particular via the Internet (22).

4. Method according to any of the preceding claims, **characterized in that** the additional piece of information is transmitted to the client (2) if the activation element is activated.

5. Method according to any of the preceding claims,
**characterized in**
- **that** the selection of the part of the information is carried out by a selection means coordinated with the server (3) and the information is transmitted together with the activation element to the client (2) or
- **that** the information is transmitted to the client (2), the selection of the part of the information is carried out at the client (2), a property of the selected part of the information is transmitted to an additional information server, an additional piece of information is selected by the additional information server, the additional piece of information or at least the availability of an additional piece of information is transmitted to the client (2) and the activation element is displayed at the client (2).

6. Method according to any of the preceding claims, **characterized in that** the activation element or the presentation element is coordinated with the part of the information at the server (3), or **in that** the activation element or the presentation element is coordinated with the part of the information at the client (2).

7. Method according to any of the preceding claims, **characterized in that** the part of the information is selected as a function
- of at least one of at least one possible additional piece of information,
- of a position within the information or
- of a property of the information or of a property of a subset of the information, within which the part of the information is present.

8. Method according to any of the preceding claims, **characterized in that** the additional information is selected as a function
- of an evaluation of the profile,
- of a rating of the additional information available for selection,
- of a property coordinated with the information, the property describing a content, a subject area, an origin or an actuality, or
- of an external condition, the external condition describing an actual date, an actual time of day, the actual whereabouts of the user (7), an actual location of the client (2), a temperature, an actual trend or an actual event.

9. Method according to any of the preceding claims, **characterized in that** the part of the information is coordinated with a first class, at least one selectable additional piece of information is coordinated with at least one second class and the at least one additional piece of information is selected if a specifiable similarity exists between the first class and the second class, the first class and the second class not necessarily being different.

10. Method according to any of the preceding claims, **characterized in that** the activation means is activated by means of a movement of a pointing device coordinated with the client (2) in or over an area coordinated with the part of the information with regard to the presentation and/or by means of an actuation of a switch coordinated with the part of the information.

11. Method according to any of the preceding claims, **characterized in that** an identifier coordinated with the user (7) or with the client (2) is detected and, depending on the identifier, the profile coordinated with the user (7) or with the client (2) is automatically determined, the identifier being formed from a registration identifier, a credit card number, an EC card number, a character sequence stored in a cookie, a dialling code, a device number or a software identifier.

12. Method according to any of the preceding claims, **characterized in that** the profile contains at least one piece of profile information with a respect to
- a property of requested or transmitted information,
- an ordered or purchased product,
- a product which has not been purchased,
- the purchasing behaviour of the user (7)
- an area of interest,
- a personal date coordinated with the user (7),
- a search term which was transmitted by the user (7), the client (2) or another client (2) coordinated with the user (7) to a search engine or a product search engine or
- a reaction of the user (7) or of a client (2) coordinated with the user (7) with regard to an additional piece of information.

13. Method according to any of the preceding claims, **characterized in that** the profile is managed by a profile server and comprises at least one piece of profile information which was acquired by an interaction of the client (2) or of a further client (2) coordinated with the user (7) with at least one further server (3).

14. Method according to any of the preceding claims, **characterized in that** a reaction of the user (7) or of the client (2) with regard to the additional piece of information is automatically detected and evaluated and automatically, as a function of a result of this evaluation,
- a rating of the additional information is carried out or
- an updating of the profile is carried out.

15. Method according to any of the preceding claims, **characterized in that** the presentation element is selected or formed as a function of at least one piece of profile information, a property of the additional information, a property of the part of the information or a criterion specifiable by means of the client (2).

16. Client-server system (1a; 1b) comprising a client (2) coordinated with a user (7) and connectable to a communication network and a server (3) connectable to the communication network, **characterized in that** the client-server system (1a; 1b) has means for carrying out a method according to any of Claims 1 to 15.

17. Client-server system (1a; 1b) according to Claim 16, **characterized in that** the client-server system (1a; 1b) comprises a profile server (20) for managing the at least one profile.

18. Client-server system according to Claim 16 or 17, **characterized in that** the client-server system (1a; 1b) comprises an additional information server (21) and the selection of the additional information can be carried out at the additional information server (21).

19. Computer program which is executable on a client-server system (1a; 1b), **characterized in that** a method according to any of Claims 1 to 15 is carried out if the computer program runs on the client-server system (1a; 1b).

20. Computer program according to Claim 19, **characterized in that** the computer program is stored on a memory element, the memory element being in the form of a read only memory (ROM), a random access memory (RAM), a hard disk, a compact disk (CD), a digital versatile disk (DVD) or at least one memory area coordinated with at least one component of the client-server system (1a; 1b).

## Revendications

1. Procédé pour la sélection et présentation d'au moins une information supplémentaire en fonction d'informations transmises ou à transmettre par un serveur (3) à un client (2) par le biais d'un réseau de communication (8), dans lequel
- un profil associé au client (2) ou un profil associé à un utilisateur (7) du client (2) est analysé automatiquement et
- une information supplémentaire est sélectionnée parmi une quantité prédéfinissable d'informations supplémentaires,
**caractérisé en ce que**
- au moins une information partielle est sélectionnée automatiquement dans les informations en fonction de l'analyse du profil,
- l'information supplémentaire est sélectionnée automatiquement en fonction de l'analyse d'au moins une propriété de l'information partielle,
- un élément d'activation activable est associé automatiquement à l'information partielle, une action associée à l'information supplémentaire étant effectuée automatiquement en cas d'activation de l'élément activable,
- un élément de présentation est associé automatiquement à l'élément d'actionnement, ledit élément de présentation permettant de déterminer au moins un paramètre relatif à la présentation de l'élément d'activation sur le client (2), et
- l'élément d'activation est présenté sur le client.

2. Procédé selon la revendication 1, **caractérisé en ce que** l'élément de présentation décrit une propriété de la présentation de l'information partielle.

3. Procédé selon la revendication 1 ou la revendication 2, **caractérisé en ce que** les informations sont transmises sous la forme d'un courrier électronique, d'un message SMS, d'une page réseau ou d'un flux de données via le réseau de communication (8) notamment via l'Internet (22).

4. Procédé selon l'une quelconque des revendications précédentes, **caractérisé en ce que** l'information supplémentaire est transmise au client (2) quand l'élément d'activation est activé.

5. Procédé selon l'une quelconque des revendications précédentes, **caractérisé en ce que**
- la sélection de l'information partielle est effectuée à l'aide d'un moyen de sélection associé au serveur (3) et les informations sont transmises au client (2) avec l'élément d'activation ou
- les informations sont transmises au client (2), la sélection de l'information partielle est effectuée sur le client (2), une propriété de l'information partielle sélectionnée est transmise à un serveur d'informations supplémentaires, lequel sélectionne une information supplémentaire, laquelle information supplémentaire ou au moins la disponibilité d'une information supplémentaire est transmise au client (2) et l'élément d'activation est affiché sur le client (2).

6. Procédé selon l'une quelconque des revendications précédentes, **caractérisé en ce que** l'élément d'activation ou l'élément de présentation est associé à l'information partielle sur le serveur (3) ou **en ce que** l'élément d'activation ou l'élément de présentation est associé à l'information partielle sur le client (2).

7. Procédé selon l'une quelconque des revendications précédentes, **caractérisé en ce que** l'information partielle est sélectionnée en fonction
- d'au moins une propriété d'au moins une information supplémentaire possible,
- d'une position au sein des informations ou
- d'une propriété des informations ou d'une propriété d'un sous-groupe d'informations, dans lequel se trouve l'information partielle.

8. Procédé selon l'une quelconque des revendications précédentes, **caractérisé en ce que** l'information supplémentaire est sélectionnée en fonction
- d'une analyse du profil,
- d'une évaluation de l'information supplémentaire à choisir
- d'une propriété associée aux informations, ladite propriété décrivant un contenu, un thème, une origine ou une actualité ou
- d'une condition externe, ladite condition externe décrivant la date du jour, l'heure qu'il est, un lieu de séjour actuel de l'utilisateur (7), un emplacement actuel du client (2), une température, une tendance actuelle ou un événement actuel.

9. Procédé selon l'une quelconque des revendications précédentes, **caractérisé en ce que** l'information partielle est associée à une premier catégorie, au moins une information supplémentaire sélectionnable est associée à au moins une seconde catégorie et la ou les informations supplémentaires sont sélectionnées quand il existe une similitude prédéfinissable entre la première catégorie et la seconde catégorie, la première catégorie et la seconde catégorie n'étant pas nécessairement différentes.

10. Procédé selon l'une quelconque des revendications précédentes, **caractérisé en ce que** le moyen d'activation est activé par déplacement d'un dispositif de pointage associé au client (2) dans ou sur une zone associée à l'information partielle relativement à la présentation et/ou par actionnement d'un bouton associé à l'information partielle.

11. Procédé selon l'une quelconque des revendications précédentes, **caractérisé en ce qu'**un identifiant associé à l'utilisateur (7) ou au client (2) est collecté et **en ce que** le profil associé à l'utilisateur (7) ou au client (2) est déterminé automatiquement en fonction de l'identifiant, ledit identifiant consistant en un identifiant d'enregistrement, un numéro de carte de crédit, un numéro de carte Eurochèque, une chaîne de caractères enregistrée dans un cookie, un identifiant de connexion, un numéro d'appareil ou un identifiant de logiciel.

12. Procédé selon l'une quelconque des revendications précédentes, **caractérisé en ce que** le profil contient au moins une information de profil concernant
- une propriété des informations demandées ou transmises,
- un produit commandé ou acheté,
- un produit non acheté,
- le comportement d'achat de l'utilisateur (7),
- un centre d'intérêt,
- une date personnelle associée à l'utilisateur (7),
- un terme de recherche transmis à un moteur de recherche ou un moteur de recherche produits par l'utilisateur (7), le client (2) ou un autre client (2) associé à l'utilisateur (7) ou
- une réaction de l'utilisateur (7), ou d'un client (2) associé à l'utilisateur (7), à une information supplémentaire.

13. Procédé selon l'une quelconque des revendications précédentes, **caractérisé en ce que** le profil est géré par un serveur de profils et contient au moins une information de profil qui a été collectée par interaction du client (2), ou d'un autre client (2) associé à l'utilisateur (7), avec au moins un autre serveur (3).

14. Procédé selon l'une quelconque des revendications précédentes, **caractérisé en ce qu'**une réaction de l'utilisateur (7) ou du client (2) à l'information supplémentaire est collectée et analysée automatiquement et qu'en fonction du résultat de cette analyse, il est effectué automatiquement
- une évaluation de l'information supplémentaire ou
- une actualisation du profil.

15. Procédé selon l'une quelconque des revendications précédentes, **caractérisé en ce que** l'élément de présentation est sélectionné ou formé en fonction au moins d'une information de profil, d'une propriété de l'information supplémentaire, d'une propriété de l'information partielle ou d'un critère prédéfinissable par le biais du client (2).

16. Système client-serveur (1a ; 1b) comprenant un client (2) apte à être relié à un réseau de communication et associé à un utilisateur (7), et un serveur (3) apte à être relié audit réseau de communication, **caractérisé en ce que** le système client-serveur (1a ; 1b) présente des moyens permettant de mettre en oeuvre un procédé selon l'une quelconque des revendications 1 à 15.

17. Système client-serveur (1a ; 1b) selon la revendication 16, **caractérisé en ce que** le système client-serveur (1a ; 1b) comprend un serveur de profils (20) pour gérer le ou les profils.

18. Système client-serveur selon la revendication 16 ou la revendication 17, **caractérisé en ce que** le système client-serveur (1a ; 1b) comprend un serveur d'informations supplémentaires (21) et **en ce que** la sélection de l'information supplémentaire peut être effectuée sur le serveur d'informations supplémentaires (21).

19. Programme informatique fonctionnant sur un système client-serveur (1a ; 1b), **caractérisé en ce qu'**un procédé selon l'une quelconque des revendications 1 à 15 est mis en oeuvre quand le programme informatique fonctionne sur le système client-serveur (1a ; 1b).

20. Programme informatique selon la revendication 19, **caractérisé en ce que** le programme informatique est enregistré sur un élément de mémoire, ledit élément de mémoire étant conçu sous la forme d'une mémoire morte (ROM), d'une mémoire vive (RAM), d'un disque dur (hard disc), d'un disque compact (CD), d'un disque numérique polyvalent(DVD) ou au moins d'une zone de mémoire associée à au moins une composante du système client-serveur (1a ; 1b).
